(19) Europäisches Patentamt / European Patent Office / Office européen des brevets

(11) **EP 4 400 245 A1**

(12) **EUROPEAN PATENT APPLICATION**
published in accordance with Art. 153(4) EPC

(43) Date of publication:
**17.07.2024 Bulletin 2024/29**

(51) International Patent Classification (IPC):
**B23K 20/12** (2006.01)

(21) Application number: **22900854.5**

(52) Cooperative Patent Classification (CPC):
**B23K 20/12**

(22) Date of filing: **01.08.2022**

(86) International application number:
**PCT/JP2022/029560**

(87) International publication number:
**WO 2023/100419 (08.06.2023 Gazette 2023/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.11.2021 JP 2021194985**

(71) Applicant: **JFE Steel Corporation**
**Tokyo 100-0011 (JP)**

(72) Inventors:
• **MATSUSHITA, Muneo**
**Tokyo 100-0011 (JP)**
• **IWATA, Shohei**
**Tokyo 100-0011 (JP)**
• **TOMITA, Kai**
**Tokyo 100-0011 (JP)**

(74) Representative: **Grünecker Patent- und Rechtsanwälte**
**PartG mbB**
**Leopoldstraße 4**
**80802 München (DE)**

(54) **METHOD FOR FRICTION-STIR-WELDING ELECTROMAGNETIC STEEL STRIP, METHOD FOR MANUFACTURING ELECTROMAGNETIC STEEL STRIP, FRICTION STIR WELDING DEVICE, AND DEVICE FOR MANUFACTURING ELECTROMAGNETIC STEEL STRIP**

(57) Provided is an electrical steel strip friction stir welding method that is able to inhibit the occurrence of coil joint fractures on a production line caused by deterioration of mechanical properties and shape of the coil joint while maintaining high work efficiency. In the method, preheated double-sided friction stir welding is performed, and joining is performed under conditions that steel microstructures of a joined portion and a thermo-mechanically affected zone formed by joining become mainly ferrite phase, respectively, and the relationships of the following Expressions (1) to (4) are simultaneously satisfied, $Dsz \leq 200\ \mu m...(1)$, $Dhaz1 \leq Dbm1...(2)$, $Dhaz2 \leq Dbm2...(3)$, and $0.9 \times (Hbm1 + Hbm2)/2 \leq Hsz \leq 1.2 \times (Hbm1 + Hbm2)/2...(4)$.

FIG. 1A

EP 4 400 245 A1

## Description

TECHNICAL FIELD

The present disclosure relates to an electrical steel strip friction stir welding method, a method of producing an electrical steel strip, a friction stir welding device, and an electrical steel strip production device.

BACKGROUND

In steel sheet production lines, such as pickling, cold rolling, annealing, and coating or plating production lines, in order to improve productivity and increase yield, performing so-called coil joining then passing a steel strip through the production line is common. Here, coil joining refers to the joining of an end (trailing end) of a preceding steel strip and an end (leading end) of the steel strip following the preceding steel strip (hereinafter also referred to as trailing steel strip) in a production line. Hereinafter, a joined portion formed by coil joining is also referred to as a coil joint. The leading end is the end of the steel strip in the direction of travel on the production line. Further, the trailing end is the end of the steel strip in the direction opposite the direction of travel on the production line. Coil joining enables rolling and the like with tension applied to the entire length of the steel strip. Further, coil joining enables highly precise control of strip thickness and shape even at the leading and trailing ends of the steel strip.

In coil joining, conventionally, flash butt welding and the like are commonly applied. However, with advances in laser welders, laser welding is becoming a mainstream application for coil joining in, for example, production lines for electrical steel sheets, stainless steel sheets, and high tensile strength steel sheets.

As examples of such technology, Patent Literature (PTL) 1 describes:
"A high-Si steel laser welding method comprising, when welding high-Si steel, welding using a filler wire containing Ni as the main component or supplying powder filler containing Ni as the main component, so that the chemical composition of weld metal satisfies the following Expression (1).

$$\mathrm{X} = [\%\mathrm{Ni}] - [\%\mathrm{Si}] \times 2.5 - ([\%\mathrm{Cr}] + [\%\mathrm{Mo}]) \times 0.4 \geq 0 \qquad ...(1)$$

Here, [%Ni], [%Si], [%Cr], and [%Mo] represent content (wt%) of Ni, Si, Cr, and Mo in the weld metal, respectively."

PTL 2 describes:
"In a laser welding method for butt welding a leading sheet and a trailing sheet using a filler wire, a ratio (Gap/DEPO) of the butt gap (Gap) between the leading sheet and the trailing sheet to an average width of the weld metal (DEPO) at an initial stage of welding is 0.3 to 0.8."

PTL 3 describes:

"In a welded portion formed by laser welding a leading sheet and a trailing sheet made of special steel that are conveyed on a continuous cold rolling line,

when L1 is the minimum thickness of base metal existing below an upper extension portion consisting of weld metal that extends to the upper side of the base metal due to cold rolling, and L2 is the minimum thickness of the base metal between the upper extension portion and a lower extension portion consisting of weld metal that extends to the lower side of the base metal due to cold rolling, then at least one of L1 or L2 is greater than zero."

CITATION LIST

Patent Literature

PTL 1: JP H5-305466 A
PTL 2: JP 2004-25284 A
PTL 3: JP 2011-140026 A
PTL 4: JP H07-505090 A (publication in Japan of WO 9310935 A1)
PTL 5: JP 3261433 B2
PTL 6: JP 4838385 B2
PTL 7: JP 4838388 B2
PTL 8: JP WO 2019/26864 A1

PTL 9: JP WO 2019/54400 A1
PTL 10: JP 6332561 B2
PTL 11: JP 6332562 B2
PTL 12: JP 6497451 B2
PTL 13: JP 2020-124739 A

Non-patent Literature

NPL 1: Cui, L.; Fujii, H.; Tsuji, N.; Nogi, K. Scripta Mater. 2007, 56, p.637-640.

SUMMARY

(Technical Problem)

Laser welding is fusion welding, and therefore causes embrittlement due to impurity segregation during fusion and solidification, and due to hydrogen entry. As a result, deterioration of mechanical properties of the joined portion (welded portion) may occur. In particular, electrical steel sheet chemical composition contains a large amount of Si, and therefore mechanical properties of coil joints tend to deteriorate significantly. Therefore, when laser welding as in PTL 1 to 3 is applied as coil joining of electrical steel strips, there is a problem in that a fracture may occur at a coil joint, resulting in a drop in productivity due to line stoppage and the like on a production line such as a continuous cold rolling line.
Further, electrical steel strips are continuously conveyed in a production line for electrical steel sheets, and therefore it is also desired to improve the work efficiency of coil joining.
It would be helpful to provide an electrical steel strip friction stir welding method that is able to inhibit the occurrence of coil joint fractures on a production line caused by deterioration of mechanical properties and shape of the coil joint while maintaining high work efficiency.
In addition, it would be helpful to provide a method of producing an electrical steel strip using the electrical steel strip friction stir welding method.
Further, it would be helpful to provide a friction stir welding device that can be suitably used for the electrical steel strip friction stir welding method.
Furthermore, it would be helpful to provide an electrical steel strip production device including the friction stir welding device.

(Solution to Problem)

The inventors conducted intensive studies to solve the technical problem outlined above. First, the inventors investigated and examined the reasons for the deterioration of mechanical properties and shape of coil joints when laser welding is applied as coil joining of electrical steel strips, and made the following discoveries.

(a) As mentioned above, electrical steel sheet chemical composition contains a large amount of Si, for example 2.0 mass% to 5.0 mass%. Si is a ferrite-stabilizing element. Therefore, when typical laser welding is applied to coil joining of electrical steel strips, ferrite crystal grains in the coil joint, which is a fusion zone, and also ferrite crystal grains in a heat-affected zone, become coarse. This greatly degrades mechanical properties of the coil joint, especially toughness and bending strength, and leads to the occurrence of coil joint fractures in the production line.
(b) Further, the technologies in PTL 1 to 3 use a filler mainly composed of Ni, an austenite-stabilizing element. Therefore, at the coil joints, mainly austenite phase is obtained. However, according to the technologies described in PTL 1 to 3, it is necessary to control balance between Ni equivalent and Cr equivalent in the fusion zone (weld metal) properly at all times by eliminating variation of the butt gap between the preceding steel strip and the trailing steel strip and by extremely strictly controlling an amount of fusion of the filler and the steel sheet at the fusion zone (weld metal). In other words, when the balance between the Ni equivalent and the Cr equivalent in the fusion zone (weld metal) is not properly controlled, a martensitic phase that is a hard and brittle microstructure forms in the coil joint. This greatly degrades mechanical properties of the coil joint, especially toughness. Further, in the heat-affected zone, mechanical properties of the coil joint deteriorate greatly due to the coarsening of ferrite crystal grains. These reasons lead to the occurrence of coil joint fractures in a production line.
(c) Further, the above-mentioned variation in the butt gap between the preceding steel strip and the trailing steel strip affects weld reinforcement height. For example, when weld reinforcement height is high and a welded portion is excessively convex, stresses will be concentrated at the weld toe portions when the weld is under load. Therefore, the above-mentioned variation in the butt gap between the preceding steel strip and the trailing steel strip is also a cause of coil joint fracture occurrence in a production line. Excess weld may be removed by grinding or other means.

However, such an increase in processing leads to a significant decrease in productivity.

Based on the above discoveries, the inventors further conducted various investigations and arrived at the idea of applying friction stir welding as electrical steel strip coil joining.

Here, friction stir welding is solid phase joining that utilizes frictional heat between a rotating tool and material to be joined and plastic flow of the material to be joined. In other words, a rotating tool is used to friction stir an unjoined portion (region to be joined) of the material to be joined. When the unjoined portion of the material to be joined is heated by frictional heat, plastic flow begins. An interface between a plastic flow zone and a base metal portion is then greatly elongated. As a result, clean interfaces without oxides come into contact with each other, and a joined portion is formed without fusion of the material to be joined. Here, a joined portion is a region that undergoes hot working due to frictional heat between the rotating tool and the material to be joined and plastic flow to form a recrystallized microstructure, and is sometimes referred to as a stir zone. Further, a region adjacent to the joined portion is affected by hot working due to frictional heat and plastic flow, but the region is formed having a microstructure without recrystallization, due to insufficient temperature and working. This region is called a thermo-mechanically affected zone. Further, a region also exists in the material to be joined that is not affected by hot working due to frictional heat and plastic flow. This region is called a base metal portion. Technology related to friction stir welding is described in, for example, PTL 4 to 13 and NPL 1, but none of these are applicable to electrical steel strip coil joining.

Based on the above ideas, the inventors conducted further studies and came to the following discoveries.

(d) To advantageously solve the problems (a) to (c), the material to be joined is preheated, and so-called double-sided friction stir welding is applied as a joining method. Further, in the joining process, it is important to select conditions for the joining so that the steel microstructures of the joined portion and thermo-mechanically affected zone formed by joining are mainly ferrite phase, respectively, the steel microstructures of the joined portion and thermo-mechanically affected zone are refined, and a hardness difference between the joined portion and the base metal portion is reduced. Specifically, it is important to select conditions that simultaneously satisfy the relationships of the following Expressions (1) to (4) for the joining.

As a result, even when electrical steel strips are used as the material to be joined, mechanical properties of the coil joint are improved without causing deterioration of the shape of the coil joint, and the occurrence of coil joint fractures in a production line is effectively inhibited. Further, joining speed may be increased while inhibiting the occurrence of defects, and this provides excellent work efficiency and is very advantageous in terms of productivity. Hereinafter, double-sided friction stir welding in which the material to be joined is preheated is also referred to as preheated double-sided friction stir welding.

$$Dsz \leq 200 \ \mu m \qquad \ldots(1)$$

$$Dhaz1 \leq Dbm1 \qquad \ldots(2)$$

$$Dhaz2 \leq Dbm2 \qquad \ldots(3)$$

$$0.9 \times (Hbm1 + Hbm2)/2 \leq Hsz \leq 1.2 \times (Hbm1 + Hbm2)/2 \qquad \ldots(4)$$

Here,

Dsz is an average value ($\mu$m) of ferrite grain size of the joined portion,
Dhaz1 is an average value ($\mu$m) of ferrite grain size of the thermo-mechanically affected zone on a first electrical steel strip side,
Dhaz2 is an average value ($\mu$m) of ferrite grain size of the thermo-mechanically affected zone on a second electrical steel strip side,
Dbm1 is an average value ($\mu$m) of ferrite grain size of the base metal portion of the first electrical steel strip,
Dbm2 is an average value ($\mu$m) of ferrite grain size of the base metal portion of the second electrical steel strip,
Hsz is an average value of hardness of the joined portion,
Hbm1 is an average value of hardness of the base metal portion of the first electrical steel strip, and
Hbm2 is an average value of hardness of the base metal portion of the second electrical steel strip.

(e) It is also preferable to select conditions that simultaneously satisfy the relationships of the Expressions (1) to (4) above and also satisfy the relationships of the following Expressions (5) and (6) for the joining. As a result, even when electrical steel strips are used as the material to be joined, mechanical properties of the coil joint are improved without causing deterioration of the shape of the coil joint, and the occurrence of coil joint fractures in a production line is more effectively inhibited.

$$0.8 \times TbmL \leq TszL \qquad \ldots(5)$$

$$TszH \leq 1.3 \times TbmH \qquad \ldots(6)$$

Here,

TszL is the minimum value (mm) of the thickness of the joined portion,
TszH is the maximum value (mm) of the thickness of the joined portion,
TbmL is the thickness (mm) of the thinner of the first electrical steel strip and the second electrical steel strip, and
TbmH is the thickness (mm) of the thicker of the first electrical steel strip and the second electrical steel strip.

When the thicknesses of the first electrical steel strip and the second electrical steel strip are the same, TbmL = TbmH.

The present disclosure is based on these discoveries and further studies.

Primary features of the present disclosure are as follows.

1. An electrical steel strip friction stir welding method for joining a first electrical steel strip and a second electrical steel strip as a material to be joined by a pair of rotating tools facing each other, comprising:

a preheating process of preheating an unjoined portion of the material to be joined by a heating device disposed in front of the rotating tools in a joining direction on at least one side of the material to be joined; and
a joining process of pressing the rotating tools into the unjoined portion of the material to be joined from both sides while rotating the rotating tools in opposite directions, and joining the first electrical steel strip and the second electrical steel strip by moving the rotating tools in the joining direction, wherein
the unjoined portion of the material to be joined is a butted portion or an overlapped portion between an end of the first electrical steel strip and an end of the second electrical steel strip following the first electrical steel strip,
the preheating process and the joining process are performed continuously by moving the heating device in the joining direction in conjunction with the rotating tools, and
in the joining process, joining is performed under conditions that steel microstructures of a joined portion and a thermo-mechanically affected zone formed by joining of the first electrical steel strip and the second electrical steel strip become mainly ferrite phase, respectively, and the relationships of the following Expressions (1) to (4) are satisfied,

$$Dsz \leq 200 \ \mu m \qquad \ldots(1)$$

$$Dhaz1 \leq Dbm1 \qquad \ldots(2)$$

$$Dhaz2 \leq Dbm2 \qquad \ldots(3)$$

$$0.9 \times (Hbm1 + Hbm2)/2 \leq Hsz \leq 1.2 \times (Hbm1 + Hbm2)/2 \qquad \ldots(4)$$

wherein

Dsz is an average value ($\mu$m) of ferrite grain size of the joined portion,
Dhaz1 is an average value ($\mu$m) of ferrite grain size of a thermo-mechanically affected zone on a first electrical steel strip side,
Dhaz2 is an average value ($\mu$m) of ferrite grain size of a thermo-mechanically affected zone on a second electrical steel strip side,

Dbm1 is an average value ($\mu$m) of ferrite grain size of a base metal portion of the first electrical steel strip,

Dbm2 is an average value ($\mu$m) of ferrite grain size of a base metal portion of the second electrical steel strip,

Hsz is an average value of hardness of the joined portion,

Hbm1 is an average value of hardness of the base metal portion of the first electrical steel strip, and

Hbm2 is an average value of hardness of the base metal portion of the second electrical steel strip.

2. The electrical steel strip friction stir welding method according to aspect 1, wherein in the joining process, the joining is performed under conditions satisfying the relationships of the following Expressions (5) and (6),

$$0.8 \times TbmL \leq TszL \qquad \ldots(5)$$

$$TszH \leq 1.3 \times TbmH \qquad \ldots(6)$$

wherein

TszL is the minimum value (mm) of the thickness of the joined portion,

TszH is the maximum value (mm) of the thickness of the joined portion,

TbmL is the thickness (mm) of the thinner of the first electrical steel strip and the second electrical steel strip,

TbmH is the thickness (mm) of the thicker of the first electrical steel strip and the second electrical steel strip, and

when the thicknesses of the first electrical steel strip and the second electrical steel strip are the same, TbmL = TbmH.

3. The electrical steel strip friction stir welding method according to aspect 1 or 2, wherein in the preheating process, a preheating temperature of the material to be joined satisfies the relationships of the following Expressions (11) to (13),

$$100 \leq TP_{W=0} \leq 1000 \qquad \ldots(11)$$

$$100 \leq TP_{W=0.2D} \leq 1000 \qquad \ldots(12)$$

$$50 \leq TP_{W=0.5D} \leq 800 \qquad \ldots(13)$$

wherein

W is a distance (mm) separated from a joining center line of the material to be joined in a perpendicular-to-joining direction, $TP_{W=0}$, $TP_{W=0.2D}$, and $TP_{W=0.5D}$ are preheating temperatures (°C) at a surface of the material to be joined at positions where W = 0, 0.2 $\times$ D, and 0.5 $\times$ D, respectively, and D is the diameter (mm) of a shoulder of the rotating tool.

4. The electrical steel strip friction stir welding method according to aspect 3, wherein in the preheating process, the preheating temperature of the material to be joined satisfies the relationships of the following Expressions (14) and (15),

$$0.70 \leq TP_{W=0.2D}/TP_{W=0} \leq 1.00 \quad \ldots(14)$$

$$TP_{W=0.5D}/TP_{W=0} \leq 0.45 \qquad \ldots(15).$$

5. The electrical steel strip friction stir welding method according to any one of aspects 1 to 4, wherein the heating device is a high-frequency induction heating device, a laser irradiation heating device, or a device combining a high-frequency induction heating device and a laser irradiation heating device.

6. A method of producing an electrical steel strip, the method comprising:

joining a first electrical steel strip and a second electrical steel strip by the electrical steel strip friction stir welding method according to any one of aspects 1 to 5 to obtain a joined steel strip; and

cold rolling the joined steel strip to obtain a cold-rolled steel strip.

7. A friction stir welding device used in the electrical steel strip friction stir welding method according to any one of aspects 1 to 5, the device comprising:

a gripping device that grips a material to be joined,

a pair of rotating tools facing each other,

a driving device for the rotating tools,

a heating device disposed in front of the rotating tools in the joining direction on at least one side of the material to be joined, and

an operation control device for the gripping device, the driving device for the rotating tools, and the heating device.

8. The friction stir welding device according to aspect 7, further comprising a temperature measuring device to measure preheating temperatures $TP_{W=0}$, $TP_{W=0.2D}$, and $TP_{W=0.5D}$ of the material to be joined on both sides of the material to be joined,

wherein

W is a distance (mm) separated from a joining center line of the material to be joined in a perpendicular-to-joining direction, $TP_{W=0}$, $TP_{W=0.2D}$, and $TP_{W=0.5D}$ are preheating temperatures (°C) at a surface of the material to be joined at positions where W = 0, $0.2 \times D$, and $0.5 \times D$, respectively, and D is the diameter (mm) of a shoulder of the rotating tool.

9. The friction stir welding device according to aspect 7 or 8, wherein the heating device is a high-frequency induction heating device, a laser irradiation heating device, or a device combining a high-frequency induction heating device and a laser irradiation heating device.

10. An electrical steel strip production device, the device comprising the friction stir welding device according to any one of aspects 7 to 9.

11. The electrical steel strip production device according to aspect 10, wherein in a continuous cold rolling line, the friction stir welding device according to any one of aspects 7 to 9 is disposed upstream of a cold rolling device, or upstream of a pickling device and a cold rolling device.

(Advantageous Effect)

According to the present disclosure, even when electrical steel strips are used as the material to be joined, no deterioration of mechanical properties or shape of the coil joint occurs, and the occurrence of coil joint fractures in a production line is effectively inhibited. Further, joining speed may be increased while inhibiting the occurrence of defects. In particular, the joining speed can be increased to 3500 mm/min or more and even 4000 mm/min or more, and this provides excellent work efficiency and is very advantageous in terms of productivity. Accordingly, productivity of electrical steel sheets is further improved, and industrial applicability is very high.

BRIEF DESCRIPTION OF THE DRAWINGS

In the accompanying drawings:

FIG. 1A is a schematic diagram for explanation of an electrical steel strip friction stir welding method according to an embodiment of the present disclosure, and is a side perspective view illustrating an example of a butt joint by preheated double-sided friction stir welding;

FIG. 1B is a view from A-A in FIG. 1A;

FIG. 1C is a top view of FIG. 1A;

FIG. 1D is a cross section view at a joining center line position of FIG. 1A;

FIG. 2A is a schematic diagram illustrating an example of shape of a rotating tool used in an electrical steel strip friction stir welding method according to an embodiment of the present disclosure;

FIG. 2B is a schematic diagram illustrating an example of shape of a rotating tool used in an electrical steel strip friction stir welding method according to an embodiment of the present disclosure; and

FIG. 3 is a schematic diagram of an electrical steel strip welded joint obtained by an electrical steel strip friction stir welding method according to an embodiment of the present disclosure.

DETAILED DESCRIPTION

The following describes embodiments of the present disclosure.

Electrical steel strip friction stir welding method

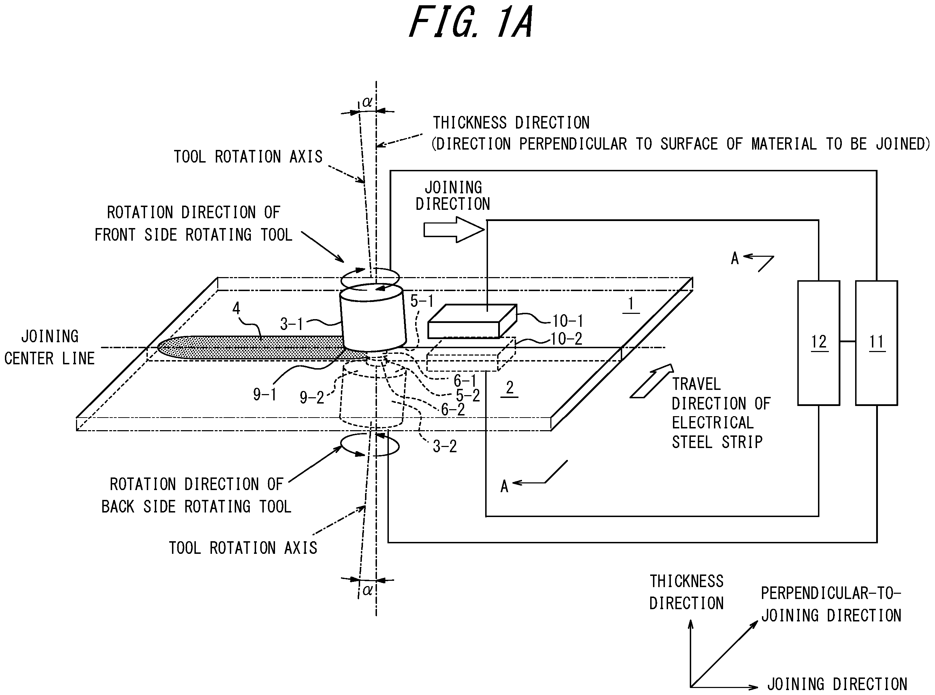

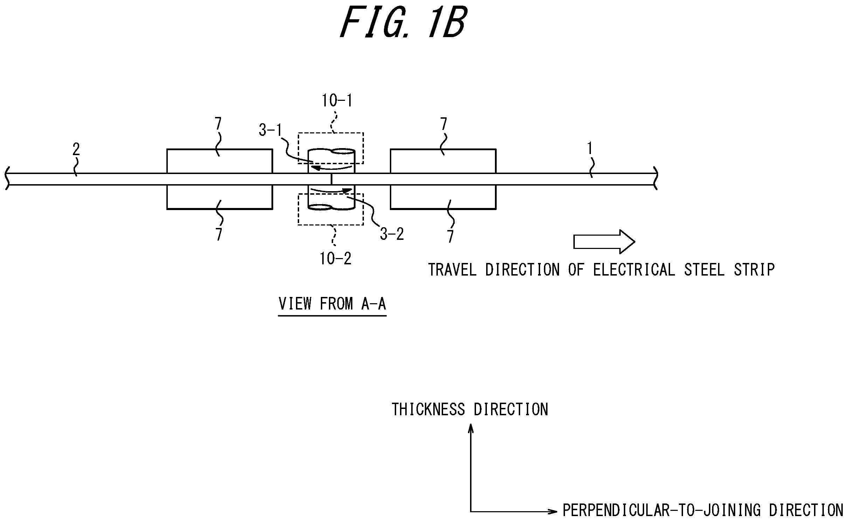

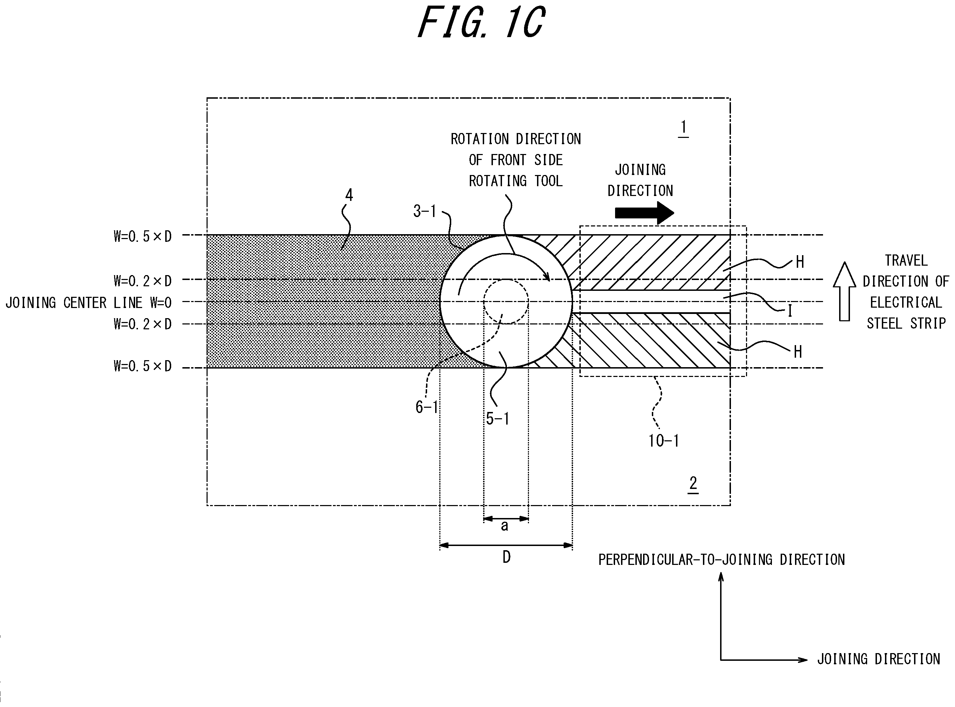

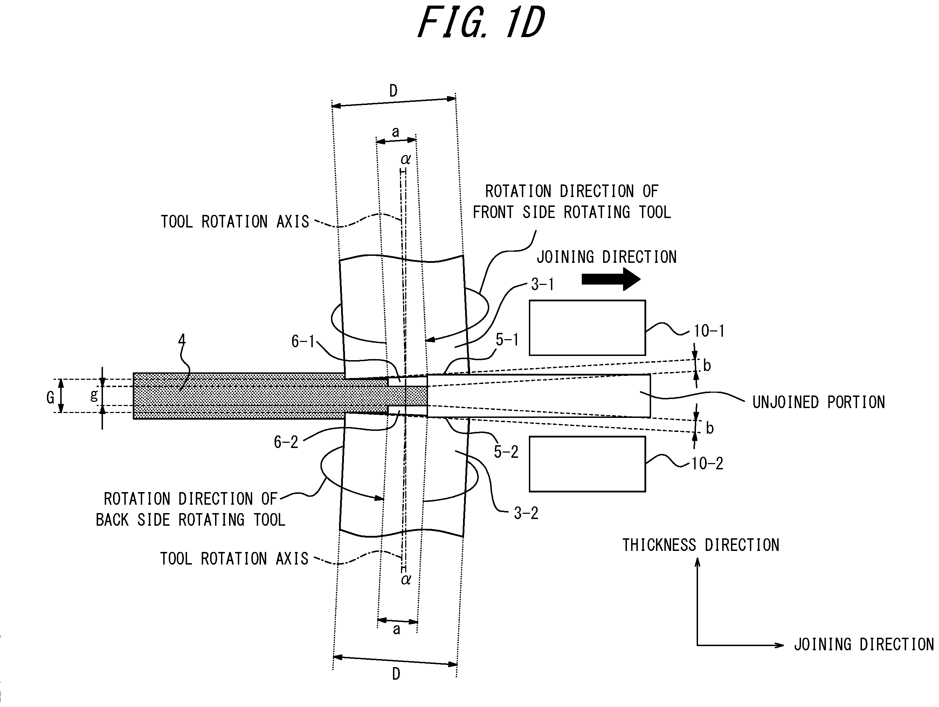

[1] First, the electrical steel strip friction stir welding method according to an embodiment of the present disclosure is described, with reference to FIG. 1A to FIG. 1D. FIG. 1A to FIG. 1D are schematic diagrams for explaining the electrical steel strip friction stir welding method according to an embodiment of the present disclosure, where FIG. 1A is a side perspective view, FIG. 1B is a view from A-A in FIG. 1A, FIG. 1C is a top view of FIG. 1A, and FIG. 1D is a cross section view at a joining center line position of FIG. 1A.

In the drawings, reference sign 1 indicates a first electrical steel strip (material to be joined), 2 indicates a second electrical steel strip (material to be joined), 3-1 indicates a rotating tool (front side rotating tool), 3-2 indicates a rotating tool (back side rotating tool), 4 indicates a joined portion, 5-1 and 5-2 indicate shoulders, 6-1 and 6-2 indicate probes (pins), 7 indicates a gripping device, 9-1 and 9-2 indicate lead ends, 10-1 indicates a heating device (front side heating device), 10-2 indicates a heating device (back side heating device), 11 indicates a driving device for the rotating tools, and 12 indicates an operation control device. The gripping device is not illustrated in FIG. 1A. Further, $\alpha$ indicates a tilt angle (°) of the rotating tool, a indicates diameter (mm) of a probe portion (hereinafter referred to as pin diameter), b indicates length (mm) of the probe portion (hereinafter referred to as pin length), D indicates diameter (mm) of the shoulder of the rotating tool, g indicates a gap (mm) between probes, G indicates a gap between the shoulders of the rotating tools, and H and I indicate preheating regions (regions to be preheated) by the heating devices. For the sake of clarity, the heating device of 10-1 (front side heating device) and/or the heating device of 10-2 (back side heating device) are indicated by dashed lines in FIG. 1B and FIG. 1C. Note that the front side is different from a surface, although they are the same written in kanji and need to be distinguished from each other in Japanese.

In FIG. 1A to FIG. 1D, the arrangement of each portion is indicated in

the joining direction (the direction of travel of the rotating tool),
the perpendicular-to-joining direction (direction perpendicular to the joining direction and perpendicular to the thickness direction, which corresponds to the width direction of the joined portion and the direction of travel of the electrical steel strips in FIG. 1A to FIG. 1D, and
the thickness direction (direction perpendicular to the surface of the material to be joined).

For example, in FIG. 1B, the vertical direction is the thickness direction. The horizontal direction is the perpendicular-to-joining direction. The direction perpendicular to the plane of the paper towards the reader is the joining direction. That is, the plane illustrated in FIG. 1B includes the perpendicular-to-joining direction and the thickness direction. Further, the heating devices of 10-1 and 10-2, which are indicated in dashed lines, are located in front of the rotating tools of 3-1 and 3-2 in the direction perpendicular to the plane of the paper towards the reader. Similarly, the heating device of 10-1 indicated in dashed lines in FIG. 1C is located in front of the preheating regions H and I in the direction perpendicular to the plane of the paper towards the reader.

Electrical steel strip here refers to an intermediate product used as material for producing an electrical steel sheet, in particular an intermediate product at a stage from the end of hot rolling to before heat treatment for primary recrystallization (that is, decarburization annealing or primary recrystallization annealing). An electrical steel strip produced by the method of producing an electrical steel strip according to an embodiment of the present disclosure is obtained by cold rolling after joining the first electrical steel strip and the second electrical steel strip, as described below. Hereinafter, an electrical steel strip obtained by joining the first electrical steel strip and the second electrical steel strip may also be referred to as a joined steel strip, and an electrical steel strip obtained by cold rolling the joined steel strip may also be referred to as a cold-rolled steel strip. Further, the electrical steel strip friction stir welding method according to an embodiment of the present disclosure is suitable, for example, for implementation in a production line for an electrical steel strip, especially in a continuous cold rolling line. Here, a continuous cold rolling line is a production line where steel strips are continuously cold rolled by a cold rolling device. A continuous cold rolling line includes, for example, a steel strip conveyor and a cold rolling device. A continuous cold rolling line may optionally be accompanied by a pickling device, an annealing furnace, a coating device, and the like.

The electrical steel strip friction stir welding method according to an embodiment of the present disclosure applies the preheated double-sided friction stir welding as electrical steel strip coil joining, as described above. In addition, the joining is performed under conditions so that the steel microstructures of the joined portion and thermo-mechanically affected zone become mainly ferrite phase, the steel microstructures of the joined portion and thermo-mechanically affected zone are refined, and a hardness difference between the joined portion and the base metal portion is reduced.

More specifically, the electrical steel strip friction stir welding method according to an embodiment of the present disclosure is

an electrical steel strip friction stir welding method for joining a first electrical steel strip and a second electrical steel strip as a material to be joined by a pair of rotating tools facing each other, including

a preheating process of preheating an unjoined portion of the material to be joined by a heating device disposed in front of the rotating tools in a joining direction on at least one side of the material to be joined; and

a joining process of pressing the rotating tools into the unjoined portion of the material to be joined from both sides while rotating the rotating tools in opposite directions, and joining the first electrical steel strip and the second electrical steel strip by moving the rotating tools in the joining direction, where

the unjoined portion of the material to be joined is a butted portion or an overlapped portion between an end of the first electrical steel strip and an end of the second electrical steel strip following the first electrical steel strip,

the preheating process and the joining process are performed continuously by moving the heating device in the joining direction in conjunction with the rotating tools, and

in the joining process, joining is performed under conditions that the steel microstructures of the joined portion and the thermo-mechanically affected zone formed by the joining of the first electrical steel strip and the second electrical steel strip become mainly ferrite phase, respectively, and the relationships of the following Expressions (1) to (4) are satisfied.

$$Dsz \leq 200 \ \mu m \qquad ...(1)$$

$$Dhaz1 \leq Dbm1 \qquad ...(2)$$

$$Dhaz2 \leq Dbm2 \qquad ...(3)$$

$$0.9 \times (Hbm1 + Hbm2)/2 \leq Hsz \leq 1.2 \times (Hbm1 + Hbm2)/2 \qquad ...(4)$$

Here,

$Dsz$ is an average value ($\mu$m) of ferrite grain size of the joined portion,
$Dhaz1$ is an average value ($\mu$m) of ferrite grain size of the thermo-mechanically affected zone on a first electrical steel strip side,
$Dhaz2$ is an average value ($\mu$m) of ferrite grain size of the thermo-mechanically affected zone on a second electrical steel strip side,
$Dbm1$ is an average value ($\mu$m) of ferrite grain size of the base metal portion of the first electrical steel strip,
$Dbm2$ is an average value ($\mu$m) of ferrite grain size of the base metal portion of the second electrical steel strip,
$Hsz$ is an average value of hardness of the joined portion,
$Hbm1$ is an average value of hardness of the base metal portion of the first electrical steel strip, and
$Hbm2$ is an average value of hardness of the base metal portion of the second electrical steel strip.

Here, butt joints and lap joints are preferred examples of joint types.

In a butt joint, end faces of the first electrical steel strip and the second electrical steel strip face each other, and a rotating tool is pressed against the butted portion including the end faces (butting face) of the first electrical steel strip and the second electrical steel strip while rotating. In this state, the first electrical steel strip and the second electrical steel strip are joined by moving the rotating tool in the joining direction.

In a lap joint, at least a portion of end portions of the first electrical steel strip and the second electrical steel strip are overlapped and a rotating tool is pressed against the overlapped portion while rotating. In this state, the first electrical steel strip and the second electrical steel strip are joined by moving the rotating tool in the joining direction.

Butt joints and lap joints differ only in the form of the unjoined portion and other device configurations are basically the same, and therefore a case of a butt joint by preheated doubled-sided friction stir welding is described as an example, as illustrated in FIG. 1A to FIG. 1D. The preheated double-sided friction stir welding method is a friction stir welding method in which the first electrical steel strip and the second electrical steel strip as the material to be joined are preheated and then joined using a pair of rotating tools facing each other. The pair of rotating tools facing each other are pressed into the unjoined portion of the preheated material to be joined from both sides of the unjoined portion while rotating in opposite directions. In this state, the rotating tools are then moved in the joining direction to join the first electrical steel strip and the second electrical steel strip.

The preheated double-sided friction stir welding uses, for example, a friction stir welding device including

a gripping device (not illustrated) that grips the material to be joined,
a pair of rotating tools facing each other,
a driving device for the rotating tools,
a heating device disposed in front of the rotating tools in the joining direction on at least one side of the material to be joined, and
an operation control device for the gripping device, the driving device for the rotating tools, and the heating device, as illustrated in FIG. 1A.

The operation control device controls, for example, the tilt angle $\alpha$ of the rotating tools, the position of the lead ends of the rotating tools and the distance g between the lead ends (probes) (hereinafter also referred to as the gap g between probes), a gap G between the shoulders of the rotating tools, joining speed (and the moving speed in the joining direction of the heating device that moves in conjunction with the rotating tools), pressure load, rotation speed of the rotating tools, rotation torque, output of the heating device, and the like.

In preheated double-sided friction stir welding, the rotating tools of the friction stir welding device are disposed on each side of the material to be joined, that is, the first electrical steel strip and the second electrical steel strip (hereinafter also simply referred to as the material to be joined). The heating device is disposed in front of the rotating tools in the joining direction on at least one side of the material to be joined. The rotating tool disposed on the front side of (vertically above) the material to be joined may be referred to as the front side rotating tool, and the rotating tool disposed on the back side of (vertically below) the material to be joined may be referred to as the back side rotating tool. Further, the heating device disposed on the front side of (vertically above) the material to be joined may be referred to as the front side heating device, and the heating device disposed on the back side of (vertically below) the material to be joined may be referred to as the back side heating device. The first electrical steel strip and the second electrical steel strip are disposed parallel to a joining center line illustrated in the drawings, and are each gripped by the gripping device.

Here, the joining center line is a line that connects set (aimed) passing positions of the axis of rotation of the rotating tool (on the surface of the material to be joined) during joining, and is parallel to the joining direction. The joining center line can also be a track of the axis of rotation of the rotating tool (on the surface of the material to be joined) during joining, and usually passes through the center position of the joined portion in the width direction. In the case of butt joining, the position is, for example, the center position in the perpendicular-to-joining direction of the butted portion including an end (trailing end) of the first electrical steel strip and an end (leading end) of the second electrical steel strip, as illustrated in FIG. 1A to 1D. In other words, the position is the midpoint between an end (trailing end) of the first electrical steel strip and an end (leading end) of the second electrical steel strip in the perpendicular-to-joining direction. In the case of lap joining, the position is, for example, the center position of the width (width in the perpendicular-to-joining direction) of the overlapped portion including an end (trailing end) of the first electrical steel strip and an end (leading end) of the second electrical steel strip.

Then, the unjoined portion (the region to be joined) of the material to be joined on the joining center line, that is, the butted portion including an end (trailing end) of the first electrical steel strip and an end (leading end) of the second electrical steel strip is preheated. Next, the rotating tools are pressed into the unjoined portion of the preheated material to be joined from both sides while rotating in opposite directions. In this state, the rotating tools are moved in the joining direction. This softens the material to be joined due to heat input to the material to be joined by the preheating and frictional heat between the material to be joined and the rotating tools. The softened site is then stirred by the rotating tools to generate plastic flow to join the material to be joined, that is, the first electrical steel strip and the second electrical steel strip. In particular, preheating the material to be joined facilitates softening of the unjoined portion and stirring by the rotating tools. As a result, the joining speed can be increased while effectively suppressing the occurrence of coil joint fractures and defects in a production line, and a high work efficiency can be achieved. In the portion where the joining is completed, the joined portion is formed. Further, the thermo-mechanically affected zone is formed adjacent to the joined portion.

The preheating and joining processes of the electrical steel strip friction stir welding method according to an embodiment of the present disclosure are described in detail below.

[Preheating process]

In the preheating process, the heating device is disposed in front of the rotating tool in the joining traveling direction on at least one side of the material to be joined, and the unjoined portion of the material to be joined is preheated by the heating device. By moving the heating device in conjunction with the rotating tool in the joining direction, the preheating process and the joining process described below can be performed continuously. Further, preheating the material to be joined facilitates softening of the unjoined portion and stirring by the rotating tools. As a result, the joining speed can be increased while effectively suppressing the occurrence of coil joint fractures and defects in a production line, and a high work efficiency can be achieved.

The following explains preferable preheating temperature and other factors using FIG. 1C as an example of a case where the heating device is disposed on both sides of the material to be joined (hereinafter referred to as double-sided disposition). Here, the preheating temperature of the material to be joined is the temperature at the surface of the material to be joined (surface temperature, not internal temperature) at the end of preheating (when the heating device passes through the material). The preheating temperature of the material to be joined preferably satisfies the following requirements on both sides of the material to be joined. The same effect can be obtained when the heating device is disposed on only one side of the material to be joined (hereinafter referred to as one-sided disposition), as long as the preheating temperature of the material to be joined satisfies the following requirements on both sides of the material to be joined. For this reason, description of an example of one-sided disposition is omitted.

$$100 \leq TP_{W=0} \leq 1000 \qquad \ldots (11)$$

$$100 \leq TP_{W=0.2D} \leq 1000 \qquad \ldots (12)$$

$$50 \leq TP_{W=0.5D} \leq 800 \qquad \ldots (13)$$

In preheated double-sided friction stir welding, it is important to soften the material to be joined and facilitate stirring by the rotating tools due to heat input to the material to be joined by preheating and frictional heat between the material to be joined and the rotating tools. To achieve this, it is effective to appropriately control the preheating temperatures in the preheating region I (region where $0 \leq W \leq 0.1 \times D$ on the surface of the material to be joined) and the preheating region H (region where $0.1 \times D < W \leq 0.5 \times D$ on the surface of the material to be joined) illustrated in FIG. 1C, especially the preheating temperature of the material to be joined at positions where $W = 0$, $0.2 \times D$, and $0.5 \times D$, which are representative positions of these heating regions. From this viewpoint, it is preferable to control the preheating temperature of the material to be joined so that it satisfies the relationships of the Expressions (11) to (13) above. Here, W is the distance (mm) separated from the joining center line of the material to be joined in the perpendicular-to-joining direction, and $TP_{W=0}$, $TP_{W=0.2D}$ and $TP_{W=0.5D}$ are the preheating temperatures (°C) at the surface of the material to be joined at the positions where $W = 0$, $0.2 \times D$, and $0.5 \times D$, respectively. Further, D is the diameter (mm) of the shoulder of the rotating tool. The preheating region is a surface region of the material to be joined to be preheated by the heating device.

$$0.70 \leq TP_{W=0.2D}/TP_{W=0} \leq 1.00 \quad \ldots (14)$$

$$TP_{W=0.5D}/TP_{W=0} \leq 0.45 \qquad \ldots (15)$$

In the preheating process, the preheating temperature of the material to be joined more preferably satisfies the relationships of the Expressions (14) and (15) above, in addition to satisfying the relationships of the Expressions (11) to (13) above. In other words, in order to obtain the effect of promoting plastic flow by preheating, it is effective to increase the preheating temperature of the material to be joined. However, if the preheating temperature of the material to be joined is excessively high, microstructure alteration may occur in the vicinity of the preheating region. Therefore, it is more effective to increase the preheating temperature in the preheating region I near the joining center line while suppressing the preheating temperature in the preheating region H away from the joining center line. In particular, it is effective to control the preheating temperature of the material to be joined at positions where $W = 0$, $0.2 \times D$, and $0.5 \times D$, which are representative positions of the preheating region I and preheating region H, so that $TP_{W=0.2D}/TP_{W=0}$ that is ratio of $TP_{W=0.2D}$ to $TP_{W=0}$ is in a range of 0.70 to 1.00, and $TP_{W=0.5D}/TP_{W=0}$ that is ratio of $TP_{W=0.5D}$ to $TP_{W=0}$ is 0.45 or less. Therefore, in the preheating process, the preheating temperature of the material to be joined more preferably satisfies the relationships of the Expressions (14) and (15) above.

The heating device used in the preheating process is not particularly limited, and examples thereof include a high-frequency induction heating device and a laser irradiation heating device.

When a high-frequency induction heating device is used as the heating device, for example, the operating frequency is adjusted within a range of 20 kHz or more and 360 kHz or less and the output is adjusted within a range of 10 kW or more and 200 kW or less, respectively. This allows the surface temperature of the material to be joined to satisfy the relationships of the Expressions (11) to (15) above.

When a laser irradiation heating device is used as the heating device, for example, the laser beam wavelength is adjusted within a range of 0.3 $\mu$m or more and 11 $\mu$m or less and the output is adjusted within a range of 2 kW or more and 50 kW or less, respectively. This allows the surface temperature of the material to be joined to satisfy the relationships of the Expressions (11) to (15) above.

A device that combines multiple types of heating devices, such as a device that combines a high-frequency induction heating device and a laser irradiation heating device, may be used as the heating device.

The distance between the heating device and the rotating tool and the area of the preheating region (hereinafter also referred to as preheating area) are not particularly limited as long as the heating device is disposed in front of the rotating tool in the joining (traveling) direction on at least one side of the material to be joined. However, if the distance between the heating device and the rotating tool becomes too small, the rotating tool may be damaged by heat from the heating device. Therefore, the positional relationship between the heating device and the rotating tool is preferably determined in consideration of heating efficiency and the influence on the material to be joined. For example, in the example of using a high-frequency induction heating device with an operating frequency of 20 kHz to 360 kHz, the distance between the heating device and the rotating tool (distance between the ends in the joining direction) is preferably in a range of 1 mm to 100 mm. The preheating area is not particularly limited, but from the viewpoint of satisfying the relationships of the Expressions (11) to (15) above, the center position of the preheating area in the perpendicular-to-joining direction is preferably in a range of $0 \leq W \leq 0.1 \times D$. The preheating area can be controlled, for example, by adjusting the arrangement, output and frequency of the heating device.

[Joining process]

After preheating the unjoined portion of the material to be joined in the preheating process, the rotating tools are pressed into the unjoined portion of the material to be joined from both sides while rotating in opposite directions. In this state, the rotating tools are then moved in the joining direction to join the material to be joined, that is, the first electrical steel strip and the second electrical steel strip.

In the joining process, it is important that the joining is performed under conditions that the steel microstructures of the joined portion and the thermo-mechanically affected zone formed by the joining become mainly ferrite phase, respectively, and the relationships of the following Expressions (1) to (4) are satisfied. As a result, even when electrical steel strips are used as the material to be joined, mechanical properties of the coil joint are improved without causing deterioration of the shape of the coil joint, and the occurrence of coil joint fractures in a production line is effectively inhibited.

$$\mathrm{Dsz} \leq 200 \ \mu\mathrm{m} \qquad \ldots(1)$$

$$\mathrm{Dhaz1} \leq \mathrm{Dbm1} \qquad \ldots(2)$$

$$\mathrm{Dhaz2} \leq \mathrm{Dbm2} \qquad \ldots(3)$$

$$0.9 \times (\mathrm{Hbm1} + \mathrm{Hbm2})/2 \leq \mathrm{Hsz} \leq 1.2 \times (\mathrm{Hbm1} + \mathrm{Hbm2})/2 \qquad \ldots(4)$$

Here,

Dsz is an average value ($\mu$m) of ferrite grain size of the joined portion,
Dhaz1 is an average value ($\mu$m) of ferrite grain size of the thermo-mechanically affected zone on a first electrical steel strip side,
Dhaz2 is an average value ($\mu$m) of ferrite grain size of the thermo-mechanically affected zone on a second electrical steel strip side,
Dbm1 is an average value ($\mu$m) of ferrite grain size of the base metal portion of the first electrical steel strip,
Dbm2 is an average value ($\mu$m) of ferrite grain size of the base metal portion of the second electrical steel strip,
Hsz is an average value of hardness of the joined portion,
Hbm1 is an average value of hardness of the base metal portion of the first electrical steel strip, and

Hbm2 is an average value of hardness of the base metal portion of the second electrical steel strip.

Further, in the electrical steel strip friction stir welding method according to an embodiment of the present disclosure, the joining is preferably performed under conditions satisfying the relationships of the following Expressions (5) and (6).

$$0.8 \times \mathrm{TbmL} \leq \mathrm{TszL} \qquad ...(5)$$

$$\mathrm{TszH} \leq 1.3 \times \mathrm{TbmH} \qquad ...(6)$$

Here,

TszL is the minimum value (mm) of the thickness of the joined portion,
TszH is the maximum value (mm) of the thickness of the joined portion,
TbmL is the thickness (mm) of the thinner of the first electrical steel strip and the second electrical steel strip, and
TbmH is the thickness (mm) of the thicker of the first electrical steel strip and the second electrical steel strip.

When the thicknesses of the first electrical steel strip and the second electrical steel strip are the same, TbmL = TbmH.
Description of the material to be joined (the first electrical steel strip and the second electrical steel strip), the joined portion, the thermo-mechanically affected zone, the above Expressions (1) to (6), and the like, is provided under section [2] Electrical steel strip welded joint, below.
In order to make the steel microstructures of the joined portion and the thermo-mechanically affected zone formed by the joining mainly ferrite phase, redpectively, and satisfy the relationships of the Expressions (1) to (4) above, and preferably further satisfy the relationships of the Expressions (5) and (6) above, it is preferable to simultaneously satisfy the following points, for example.

- The aforementioned preheating process is performed.
- Further, the rotation speed RS (r/min) of the rotating tools, the diameter D (mm) of the shoulders of the rotating tools, and the joining speed JS (mm/min), expressed as RS × D³/JS, satisfy the relationships of the following Expressions (7) and (8).

$$4 \times \mathrm{TJ} \leq \mathrm{D} \leq 10 \times \mathrm{TJ} \qquad ...(7)$$

$$180 \times \mathrm{TJ} \leq \mathrm{RS} \times \mathrm{D}^3/\mathrm{JS} \leq 1500 \times \mathrm{TJ} \qquad ...(8)$$

Here, TJ in Expressions (7) and (8) is defined such that,

when the unjoined portion is the butted portion, TJ is the average value (mm) of the thickness of the first electrical steel strip and the thickness of the second electrical steel strip, and
when the unjoined portion is the overlapped portion, TJ is the thickness (mm) of the overlapped portion (that is, the sum of the thickness of the first electrical steel strip and the thickness of the second electrical steel strip).

In other words, the diameter D of the shoulders of the rotating tools (hereinafter also simply referred to as shoulder diameter D) is appropriately controlled according to the thickness of the unjoined portion. This effectively imparts to the material to be joined, that is, the first electrical steel strip and the second electrical steel strip, a temperature increase due to frictional heat generated between the rotating tools and the material to be joined, and a shear stress due to frictional force. Here, when the shoulder diameter D is less than 4 × TJ (mm), sufficient plastic flow might not be obtained, and it might be difficult to satisfy the predetermined relationship. On the other hand, when the shoulder diameter D exceeds 10 × TJ (mm), the region where plastic flow occurs is unnecessarily expanded, and an excessive amount of heat is injected into the joined portion. This may coarsen the recrystallized microstructure of the joined portion, making it difficult to satisfy the predetermined relationship. Therefore, to make the conditions satisfy the predetermined relationships, it is preferable to satisfy the relationship of the Expression (7) above for the shoulder diameter D. The shoulder diameter D is more preferably 5 × TJ (mm) or more. The shoulder diameter D is more preferably 9 × TJ (mm) or less.

Further, RS × D$^3$/JS is a parameter that correlates with the amount of heat generated per unit joint length. By setting the range of RS × D$^3$/JS from 180 × TJ to 1500 × TJ, the temperature increase due to frictional heat generated between the rotating tools and the material to be joined and the shear stress due to frictional force may be effectively imparted to the material to be joined, that is, the first electrical steel strip and the second electrical steel strip. Here, when RS × D$^3$/JS is less than 180 × TJ, the amount of heat generated may be insufficient. Therefore, it may be difficult to form a joining interface in a metallurgically joined state at mating surfaces of the first electrical steel strip and the second electrical steel strip and to satisfy the predetermined relationship. On the other hand, when RS × D$^3$/JS exceeds 1500 × TJ, the amount of heat generated by friction stirring becomes excessive, and an excessive amount of heat is injected into the joined portion. This increases the peak temperature (the maximum arrival temperature) and decreases the cooling rate of the joined portion, which leads to coarsening of the recrystallized microstructure of the joined portion. As a result, it may be difficult to satisfy the predetermined relationship. Therefore, to make the conditions satisfy the predetermined relationships, it is preferable to satisfy the relationship of the Expression (8) above for RS × D$^3$/JS. RS × D$^3$/JS is more preferably 240 × TJ or more. RS × D$^3$/JS is more preferably 1200 × TJ or less.

When the rotation speeds RS and/or the shoulder diameters D of the rotating tools are different between the front side rotating tool and the back side rotating tool, the relationships of the above Expressions (7) and (8) are preferably satisfied for the front side rotating tool and the back side rotating tool, respectively.

In the electrical steel strip friction stir welding method according to an embodiment of the present disclosure, the tilt angle α of the rotating tools preferably satisfies the relationship of the following Expression (9).

$$0° < \alpha \leq 2° \qquad \qquad ...(9)$$

Here, α is the tilt angle of the axis of rotation of the rotating tool (hereinafter also referred to as tool rotation axis) from the thickness direction (direction perpendicular to the surface of the material to be joined) in a plane including the joining direction and the thickness direction (direction perpendicular to the surface of the material to be joined). The direction (angle) in which the lead end of the rotating tool leads the joining direction is +.

The rotating tool is formed of a material harder than the material to be joined. However, when a rotating tool made of a material with poor toughness, such as ceramic, is subjected to a force in a bending direction against the probe, stress concentrates locally and may lead to destruction. In this respect, when the tool rotation axis is tilted at an angle α(°) from the thickness direction and the leading end of the probe leads the joining direction, the load on the rotating tool may be received by the rotating tool as a compressive force in the direction of the axis of rotation. This reduces force in the bending direction and helps avoid destruction of the rotating tool.

Here, when the tilt angle α of the rotating tool exceeds 0°, the effect described above is obtainable. However, when the tilt angle α of the rotating tool exceeds 2°, front and back surfaces of the joined portion tend to become concave. This decreases the minimum value of joined portion thickness relative to base metal thickness. As a result, joint strength is adversely affected, which may lead to the occurrence of coil joint fractures in a production line. Therefore, the tilt angle α of the rotating tool is preferably in the range of 0° < α ≤ 2° for both the front side rotating tool and the back side rotating tool.

Further, in the electrical steel strip friction stir welding method according to an embodiment of the present disclosure, the gap G (mm) between the shoulders of the rotating tools preferably satisfies the relationship of the following Expression (10).

$$0.5 × TJ - 0.1 × D × \sin\alpha \leq G \leq 0.9 × TJ - 0.1 × D × \sin\alpha \qquad ...(10)$$

In other words, in double-sided friction stir welding, appropriately controlling the gap G between the shoulders of the rotating tools (hereinafter also simply referred to as shoulder gap G) illustrated in FIG. 1D is advantageous from the viewpoint of achieving a high joining speed while inhibiting defect occurrence during joining. The shoulder gap G may be said to be the separation distance in the thickness direction between the shoulder of the front side rotating tool and the shoulder of the back side rotating tool. In particular, when the shoulder gap G is in the range from 0.5 × TJ - 0.1 × D × sinα to 0.9 × TJ - 0.1 × D × sinα, the shoulders of the rotating tools facing each other are in close contact with or pushed into the front side and the back side of the material to be joined. As a result, the material to be joined is pressed by the shoulders of the rotating tools from both the front side and the back side with sufficient load, which is advantageous in achieving high joining speed while inhibiting defect occurrence during joining. Therefore, the shoulder gap G is preferably in the range from 0.5 × TJ - 0.1 × D × sinα to 0.9 × TJ - 0.1 × D × sinα.

Conditions other than the above are not particularly limited as long as conditions satisfy the relationships of the above Expressions (1) to (4) and preferably satisfy the relationships of the above Expressions (5) to (10), and may be in accordance with conventional methods.

For example, the rotation speed of the rotating tools is preferably 200 r/min to 6000 r/min. Keeping the rotation speed of the rotating tools in this range inhibits deterioration of mechanical properties due to excessive heat input while maintaining a good surface profile, and is therefore advantageous. The rotation speed of the rotating tools is more preferably 300 r/min or more. The rotation speed of the rotating tools is more preferably 5000 r/min or less.

The joining speed is preferably 1000 mm/min to 10000 mm/min. The joining speed is more preferably 2000 mm/min or more, still more preferably 3500 mm/min or more, even more preferably 4000 mm/min or more, and even more preferably 5000 mm/min or more.

The positions of the lead ends of the rotating tools, indentation load, rotation torque, gap between probes, and the like may be set according to conventional methods.

As illustrated in FIG. 1A to FIG. 1D, in the preheated double-sided friction stir welding, the direction of rotation of the front side rotating tool and the direction of rotation of the back side rotating tool are opposed when viewed from the front (or back) side of the material to be joined. The rotation speed of the front side rotating tool is preferably the same as the rotation speed of the back side rotating tool. This allows the rotation torques applied to the material to be joined from the front side rotating tool and the back side rotating tool to cancel each other out. As a result, the structure of the jig that holds the material to be joined may be simplified compared to the one-sided friction stir welding method, in which the unjoined portion is pressed from one side.

Further, when the rotation direction of the front side rotating tool and the rotation direction of the back side rotating tool are in the same direction as viewed from the front (or back) side of the material to be joined, the relative speed of one rotating tool to the other approaches zero. As a result, the plastic flow of the material to be joined approaches a homogeneous state and plastic deformation is reduced. Therefore, achieving a good joined state is difficult because heat generation due to plastic deformation of the material is also not obtained. Therefore, from the viewpoint of uniformly obtaining sufficient temperature increase and shear stress in the thickness direction of the material to be joined to achieve a good joined state, it is preferable to make the direction of rotation of the front side rotating tool and the direction of rotation of the back side rotating tool opposed when viewed from the front (or back) side of the material to be joined.

Further, the rotating tools used in the electrical steel strip friction stir welding method according to an embodiment of the present disclosure are also not particularly limited, and may be in accordance with conventional methods.

For example, the lead ends of the rotating tools are in contact with the material to be joined, that is, the first electrical steel strip and the second electrical steel strip, during joining. Accordingly, the lead ends of the rotating tools are made of a harder material than the first electrical steel strip and the second electrical steel strip under the high temperature conditions during joining. This allows the rotating tools to apply deformation to the first electrical steel strip and the second electrical steel strip while maintaining the shape of the lead ends during joining. As a result, high stirring capacity is continuously achievable, enabling proper joining. The hardness of the lead ends of the rotating tools, the first electrical steel strip, and the second electrical steel strip may be measured and compared by a high temperature Vickers hardness test. It may suffice that only the lead ends of the rotating tools are made of a material harder than the first electrical steel strip and the second electrical steel strip. Alternatively, the rotating tools may entirely be made of a material harder than the first electrical steel strip and the second electrical steel strip.

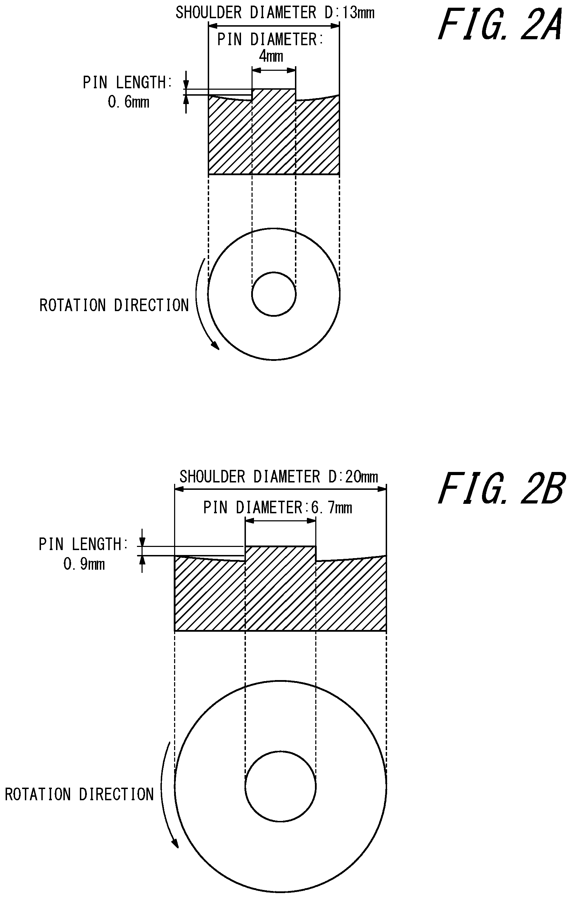

FIG. 2A and FIG. 2B illustrate examples of rotating tools used in double-sided friction stir welding, in which the lead ends of the rotating tools each include a shoulder (the range indicated by the shoulder diameter in the drawings) and a probe (the range indicated by the pin diameter in the drawings) disposed on the shoulder and sharing the axis of rotation with the shoulder.

In the rotating tool example illustrated in FIG. 2A, the rotating tool has shoulder diameter D: 13 mm, pin diameter: 4 mm, pin length: 0.6 mm, and concavity depth (not labelled): 0.3 mm.

In the rotating tool example illustrated in FIG. 2B, the rotating tool has shoulder diameter D: 20 mm, pin diameter: 6.7 mm, pin length: 0.9 mm, and concavity depth (not labelled): 0.3 mm.

The shoulder presents a flat shape formed by a substantially flat or gently curved surface. The shoulder functions to generate frictional heat through contact with the first electrical steel strip and the second electrical steel strip while rotating during joining. Further, the shoulder functions to press on the heat-softened region to prevent material from separating and to promote plastic flow in the direction of rotation.

The probe is a discontinuous shape with the shoulder and protrudes substantially perpendicularly toward the material to be joined (not illustrated). The probe functions to improve the stirring capacity in the vicinity of the mid-thickness part by penetrating in the mid-thickness direction of the softened portions of the first electrical steel strip and the second electrical steel strip during joining. Further, the probe is typically located in the center of the shoulder.

For the shoulder diameter D (mm), the relationship of the above Expressions (7) and (8) is preferably satisfied, as described above. Further, the pin diameter and the pin length of each of the rotating tools are not particularly limited, and may be set as needed in accordance with conventional methods. For example, when butt-joining the first electrical steel strip and the second electrical steel strip having different thicknesses, an average thickness of the first electrical steel strip and the second electrical steel strip may be considered and the pin diameter, the pin length, and the like of the rotating tools may be set according to conventional methods. Further, when overlap joining the first electrical steel strip and the second electrical steel strip, the total thickness of the first electrical steel strip and the second electrical steel strip may be considered and the pin diameter, the pin length, and the like of the rotating tools may be set according to conventional methods.

In addition to the above rotating tool that has a shoulder and a probe at the lead end of the rotating tool (hereinafter also referred to simply as a rotating tool with a probe), a rotating tool without a probe that has only a shoulder at the lead end of the rotating tool (hereinafter also referred to simply as a rotating tool without a probe) can also be used as the rotating tool. A rotating tool without a probe is, for example, a rotating tool without a probe in which a leading end face of the rotating tool (contact surface with the material to be joined) is a plane, a convex curved surface, or a concave curved surface. In the case of a rotating tool without a probe, the shoulder diameter D may be a leading end diameter. The leading end diameter is the diameter of the leading end face of the rotating tool in the plane perpendicular to the axis of rotation (the diameter of the projected area when the leading end face of the rotating tool is projected in the direction parallel to the axis of rotation).

[2] Electrical steel strip welded joint

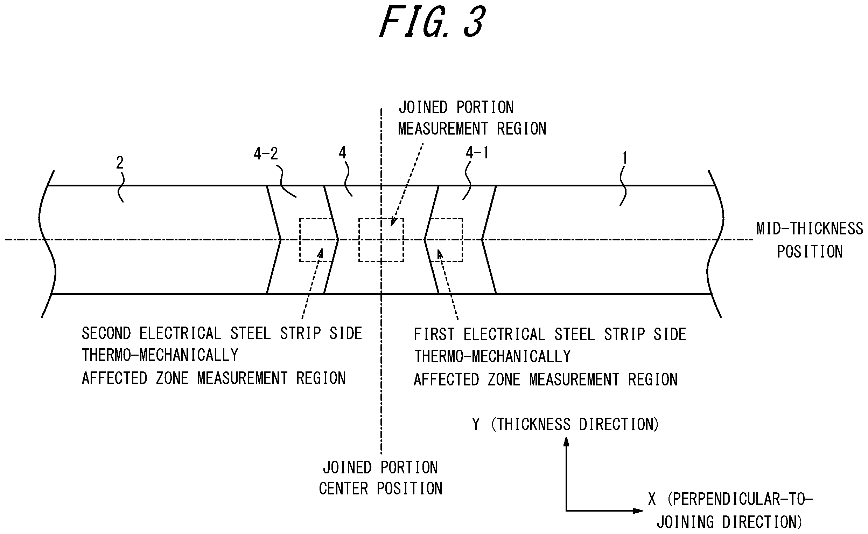

The following is a description of an electrical steel strip welded joint, with reference to FIG. 3. In the drawing, reference sign 1 indicates the first electrical steel strip (material to be joined), 2 indicates the second electrical steel strip (material to be joined), 4 indicates the joined portion, 4-1 indicates the thermo-mechanically affected zone (first electrical steel strip side), and 4-2 indicates the thermo-mechanically affected zone (second electrical steel strip side). FIG. 3 illustrates a thickness direction cross section view of the electrical steel strip welded joint. In the drawing, the vertical direction is the thickness direction. The horizontal direction is the perpendicular-to-joining direction. The direction perpendicular to the plane of the paper towards the reader is the joining direction. That is, the plane illustrated in FIG. 3 (the thickness direction cross section) includes the perpendicular-to-joining direction and the thickness direction.

The above-mentioned electrical steel strip welded joint is:

an electrical steel strip welded joint, joining the first electrical steel strip and the second electrical steel strip, the electrical steel strip welded joint including a joined portion and a thermo-mechanically affected zone adjacent to the joined portion, where
the steel microstructures of the joined portion and the thermo-mechanically affected zone are mainly ferrite phase, respectively, and
the following Expressions (1) to (4) are satisfied.

$$\mathrm{Dsz} \leq 200 \ \mu\mathrm{m} \qquad \ldots(1)$$

$$\mathrm{Dhaz1} \leq \mathrm{Dbm1} \qquad \ldots(2)$$

$$\mathrm{Dhaz2} \leq \mathrm{Dbm2} \qquad \ldots(3)$$

$$0.9 \times (\mathrm{Hbm1} + \mathrm{Hbm2})/2 \leq \mathrm{Hsz} \leq 1.2 \times (\mathrm{Hbm1} + \mathrm{Hbm2})/2 \qquad \ldots(4)$$

Here,

Dsz is the average value ($\mu$m) of ferrite grain size of the joined portion,
Dhaz1 is the average value ($\mu$m) of ferrite grain size of the thermo-mechanically affected zone on the first electrical steel strip side,
Dhaz2 is the average value ($\mu$m) of ferrite grain size of the thermo-mechanically affected zone on the second electrical steel strip side,
Dbm1 is the average value ($\mu$m) of ferrite grain size of the base metal portion of the first electrical steel strip,
Dbm2 is the average value ($\mu$m) of ferrite grain size of the base metal portion of the second electrical steel strip,
Hsz is the average value of hardness of the joined portion,
Hbm1 is the average value of hardness of the base metal portion of the first electrical steel strip, and
Hbm2 is the average value of hardness of the base metal portion of the second electrical steel strip.

Further, the electrical steel strip welded joint may be obtained (produced), for example, by the electrical steel strip friction stir welding method according to an embodiment of the present disclosure, described above.

[Material to be joined (first electrical steel strip and second electrical steel strip)]

The first electrical steel strip and the second electrical steel strip are electrical steel strips that are the material to be joined. The chemical compositions of the first electrical steel strip and the second electrical steel strip are not particularly limited as long as the chemical compositions are typical of electrical steel strips (electrical steel sheets) at a cold rolling stage.

As a chemical composition of such an electrical steel strip, an example is a chemical composition containing Si in a range of 2.0 mass% to 5.0 mass%. Further, the following chemical composition is an example: C: 0.005 mass% or less, Si: 2.0 mass% to 5.0 mass%, Al: 3.0 mass% or less, Mn: 2.00 mass% or less, P: 0.2 mass% or less, S: 0.01 mass% or less, and N: 0.01 mass% or less, with the balance being Fe and inevitable impurity. The above chemical composition may contain at least one selected from the group consisting of, in mass%: Sn: 0.2 % or less, Sb: 0.2 % or less, Ca: 0.01 % or less, REM: 0.05 % or less, and Mg: 0.01 % or less. Further, the above chemical compositions may contain at least one element selected from the group consisting of, in mass%: Cr: 1 % or less, Ni: 1 % or less, and Cu: 1 % or less. Elements other than Si and Fe may each be 0 %.

Further, the chemical compositions of the first electrical steel strip and the second electrical steel strip may be the same or different.

The thickness t1 of the first electrical steel strip and the thickness t2 of the second electrical steel strip are not particularly limited, t1 and t2 are respectively preferably 1.2 mm to 3.2 mm. t1 and t2 may be the same or different.

Further, in the material to be joined, that is, the first electrical steel strip and the second electrical steel strip, a region not affected by hot working due to frictional heat and plastic flow is called the base metal portion.

Further, the base metal portion, as well as the joined portion and the thermo-mechanically affected zone described below, are defined as follows.

The electrical steel strip welded joint is cut in the thickness (vertical) direction so that the plane illustrated in FIG. 3 (that is, the plane including the perpendicular-to-joining direction and the thickness direction) is the cross section. The cross section is then polished and etched with a saturated picric acid solution, nital (a solution of nitrate and ethanol) or aqua regia (a solution of concentrated hydrochloric acid and concentrated nitrate mixed in a 3:1 volume ratio). The cross section is then observed under an optical microscope to determine the degree of etching and the like, and to delineate the base metal portion, the joined portion, and the thermo-mechanically affected zone.

[Joined portion]

The joined portion is the region that undergoes hot working due to frictional heat and plastic flow between the rotating tool and the material to be joined, resulting in a recrystallized microstructure.

The joined portion is composed of a mainly ferrite phase steel microstructure, specifically, with ferrite phase having an area ratio of 95 % or more. The area ratio of the ferrite phase may be 100 %. The area ratio of the residual microstructure other than the ferrite phase is 5 % or less. As the residual microstructure other than the ferrite phase, examples include secondary phases such as martensite, sulfides, nitrides, carbides, and the like. The area ratio of the residual microstructure may be 0 %.

The area ratio of the ferrite phase is measured as follows.

A test piece is cut from the electrical steel strip welded joint so that a joined portion measurement region, described below, is included in an observation plane. The observation plane is the plane illustrated in FIG. 3 (that is, the plane that includes the perpendicular-to-joining direction and the thickness direction). The observation plane of the test piece is then polished and etched with 3 vol% nital, saturated picric acid solution or aqua regia to reveal the microstructure. Then, in the joined portion measurement region, described below, a total of ten fields of view are captured with an optical microscope at a magnification of 500×. From the obtained microstructure images, the area of ferrite phase is calculated for the ten fields of view using Adobe Photoshop, sold by Adobe Systems Inc. The area of ferrite phase calculated for each field of view is then divided by the area of the field of view and multiplied by 100. The arithmetic mean of those values is then used as the area ratio of the ferrite phase.

Further, refinement of the steel microstructure of the joined portion is important. Specifically, reducing grain size of ferrite crystal grains of the steel microstructure of the joined portion (hereinafter also referred to as ferrite grain size) to satisfy the relationship of the following Expression (1) is important. As a result, even when electrical steel strips are used as the material to be joined, mechanical properties of the coil joint are improved without causing deterioration of the shape of the coil joint, and the occurrence of coil joint fractures in a production line is effectively inhibited.

$$\mathrm{Dsz} \leq 200~\mu\mathrm{m} \qquad \ldots(1)$$

Here,

Dsz is the average value ($\mu$m) of ferrite grain size of the joined portion.

Here, Dsz is measured in accordance with Japanese Industrial Standard JIS G 0551. Specifically, measurement is made as follows.

The electrical steel strip welded joint is cut in the thickness (vertical) direction so that the plane illustrated in FIG. 3 (that is, the plane including the perpendicular-to-joining direction and the thickness direction) is the cross section. In the cross section, the X axis is the perpendicular-to-joining direction and the Y axis is the thickness direction. The origin of the X axis and the Y axis is the center position of the joined portion in the perpendicular-to-joining direction and the mid-thickness position of the material to be joined in the thickness (vertical) direction. The center position of the joined portion in the perpendicular-to-joining direction is, for example, the center position of the butt gap in the case of a butt joint or the center position of the overlapped portion in the case of a lap joint. The mid-thickness position of the material to be joined in the thickness (vertical) direction is, for example, the mid-thickness position of the smaller of the first electrical steel strip and the second electrical steel strip in the case of a butt joint, or the mid-thickness position of the overlapped portion in the case of a lap joint. A region defined as $X = -0.2 \times t$ to $+0.2 \times t$ and $Y = -0.2 \times t$ to $+0.2 \times t$ is the measurement region. Here, t is an average value (mm) of thickness of the first electrical steel strip and thickness of the second electrical steel strip. However, when the measurement region includes a region that is not the joined portion, such as the thermo-mechanically affected zone or the base metal portion, such a region is excluded from the measurement region. For the X axis and the Y axis, + and - may be set arbitrarily.

Then, at any position in the measurement region, ferrite grain size of the joined portion is measured a total of five times by the cutting method (evaluated by the number of crystal grains captured per 1 mm of a test line or the number P of intersections) in accordance with JIS G 0551 "Steels - Micrographic determination of the apparent grain size", and the average value of these measurements is Dsz. The measurement region of ferrite grain size of the joined portion is hereinafter also referred to simply as the joined portion measurement region.

Further, reducing a hardness difference between the joined portion and the base metal portion, specifically to satisfy the relationship of the following Expression (4), is important. As a result, even when electrical steel strips are used as the material to be joined, mechanical properties of the coil joint are improved without causing deterioration of the shape of the coil joint, and the occurrence of coil joint fractures in a production line is effectively inhibited.

$$0.9 \times (\mathrm{Hbm1} + \mathrm{Hbm2})/2 \leq \mathrm{Hsz} \leq 1.2 \times (\mathrm{Hbm1} + \mathrm{Hbm2})/2 \qquad ...(4)$$

Here,

Hsz is the average value of hardness of the joined portion,
Hbm1 is the average value of hardness of the base metal portion of the first electrical steel strip, and
Hbm2 is the average value of hardness of the base metal portion of the second electrical steel strip.

Here, Hsz, Hbm1, and Hbm2 are measured in accordance with JIS Z 2244. Specifically, each is measured as follows.

Vickers hardness (HV) is measured at any five locations in the joined portion measurement region on the cross section under a condition of test force: 4.9 N. The average of these values is then taken as Hsz.

Further, on the cross section, Vickers hardness (HV) is measured at any five locations in a region $\pm 0.2 \times t1$ (level in the thickness (vertical) direction) from the mid-thickness position of the base metal portion of the first electrical steel strip and any five locations in a region $\pm 0.2 \times t2$ (level in the thickness (vertical) direction) from the mid-thickness position of the base metal portion of the second electrical steel strip, under the test force: 4.9 N. The position along the perpendicular-to-joining (horizontal) direction may be selected arbitrarily, as long as the position is in the base metal portion. The average values of Vickers hardness (HV) measured on the base metal portion of the first electrical steel strip and the base metal portion of the second electrical steel strip are Hbm1 and Hbm2, respectively. Here, t1 and t2 are the thicknesses of the first electrical steel strip and the second electrical steel strip, respectively.

Further, the thickness of the joined portion is not particularly limited. Appropriate control of the relationship between the thicknesses of the first electrical steel strip and the second electrical steel strip, specifically satisfying the relationships of the following Expressions (5) and (6), is preferred. As a result, even when electrical steel strips are used as the material to be joined, mechanical properties of the coil joint are further improved without causing deterioration of the shape of the coil joint, and the occurrence of coil joint fractures in a production line may be more effectively inhibited.

$$0.8 \times \mathrm{TbmL} \leq \mathrm{TszL} \qquad\qquad ...(5)$$

$$TszH \leq 1.3 \times TbmH \qquad ...(6)$$

Here,

TszL is the minimum value (mm) of the thickness of the joined portion,
TszH is the maximum value (mm) of the thickness of the joined portion,
TbmL is the thickness (mm) of the thinner of the first electrical steel strip and the second electrical steel strip, and
TbmH is the thickness (mm) of the thicker of the first electrical steel strip and the second electrical steel strip.

When the thicknesses of the first electrical steel strip and the second electrical steel strip are the same, TbmL = TbmH.

TszL and TszH may be measured as follows, for example. The electrical steel strip welded joint is cut in the thickness (vertical) direction so that the plane illustrated in FIG. 3 (that is, the plane including the perpendicular-to-joining direction and the thickness direction) is the cross section. Then, TszL and TszH are measured at the cross section using a caliper or the like.

[Thermo-mechanically affected zone]

The thermo-mechanically affected zone is adjacent to the joined portion and is a region affected by hot working due to frictional heat and plastic flow, but the temperature and working are insufficient to reach a recrystallized microstructure. Further, the thermo-mechanically affected zone is formed on both sides of the first electrical steel strip and the second electrical steel strip adjacent to the joined portion.

The thermo-mechanically affected zone, like the joined portion, is composed of a mainly ferrite phase steel microstructure, specifically, a ferrite phase having an area ratio of 95 % or more. The area ratio of the ferrite phase may be 100 %. The area ratio of the residual microstructure other than the ferrite phase is 5 % or less. As the residual microstructure other than the ferrite phase, examples include secondary phases such as martensite, sulfides, nitrides, carbides, and the like. The area ratio of the residual microstructure may be 0 %. The area ratio of the ferrite phase may be measured by the same method as described above.

Further, the steel microstructure of the thermo-mechanically affected zone is refined, specifically, ferrite grain size in the thermo-mechanically affected zone is made equal to or less than the ferrite grain size in the base metal portion. That is, satisfying the relationships of the following Expressions (2) and (3) is important.

$$Dhaz1 \leq Dbm1 \qquad ...(2)$$

$$Dhaz2 \leq Dbm2 \qquad ...(3)$$

Here,

Dhaz1 is the average value ($\mu$m) of ferrite grain size of the thermo-mechanically affected zone on the first electrical steel strip side,
Dhaz2 is the average value ($\mu$m) of ferrite grain size of the thermo-mechanically affected zone on the second electrical steel strip side,
Dbm1 is the average value ($\mu$m) of ferrite grain size of the base metal portion of the first electrical steel strip, and
Dbm2 is the average value ($\mu$m) of ferrite grain size of the base metal portion of the second electrical steel strip.

Here, Dhaz1, Dhaz2, Dbm1, and Dbm2 are measured in the same manner as Dsz, the average value of ferrite grain size of the joined portion, according to JIS G 0551.

Further, the measurement region of the ferrite grain size of the thermo-mechanically affected zone on the first electrical steel strip side (hereinafter also referred to as the first electrical steel strip side thermo-mechanically affected zone measurement region) is set as follows. The electrical steel strip welded joint is cut in the thickness (vertical) direction so that the plane illustrated in FIG. 3 (that is, the plane including the perpendicular-to-joining direction and the thickness direction) is the cross section. In the cross section, the X axis is the perpendicular-to-joining direction and the Y axis is the thickness direction. A boundary position between the joined portion and the thermo-mechanically affected zone on the first electrical steel strip side at the mid-thickness position (level) of the first electrical steel strip is the origin of the X axis and the Y axis. For the X axis, the first electrical steel strip side is + and the joined portion side is -, and the measurement region is a region defined as X = 0 to +0.4 × t1 and Y = -0.2 × t1 to +0.2 × t1. Here, t1 is the thickness of the first electrical steel strip. For the Y axis, + and - may be set arbitrarily. However, when the measurement region includes a region that is not the thermo-mechanically affected zone on the first electrical steel strip side, such as the joined portion or the base metal portion, such a region is excluded from the measurement region.

As mentioned above, the joined portion is the region that undergoes hot working due to frictional heat and plastic flow between the rotating tool and the material to be joined, resulting in a recrystallized microstructure. The thermo-mechanically affected zone is a region adjacent to the joined portion and is affected by hot working due to frictional heat and plastic flow, but the temperature and working are insufficient to reach a recrystallized microstructure. The base metal is the region unaffected by hot working due to frictional heat and plastic flow.

Similarly, the measurement region of the ferrite grain size of the thermo-mechanically affected zone on the second electrical steel strip side (hereinafter also referred to as the second electrical steel strip side thermo-mechanically affected zone measurement region) is set as follows. The electrical steel strip welded joint is cut in the thickness (vertical) direction so that the plane illustrated in FIG. 3 (that is, the plane including the perpendicular-to-joining direction and the thickness direction) is the cross section. In the cross section, the X axis is the perpendicular-to-joining direction and the Y axis is the thickness direction. A boundary position between the joined portion and the thermo-mechanically affected zone on the second electrical steel strip side at the mid-thickness position (level) of the second electrical steel strip is the origin of the X axis and the Y axis. For the X axis, the second electrical steel strip side is + and the joined portion side is -, and the measurement region is a region defined as X = 0 to +0.4 × t2 and Y = -0.2 × t2 to +0.2 × t2. Here, t2 is the thickness of the second electrical steel strip. For the Y axis, + and - may be set arbitrarily. However, when the measurement region includes a region that is not the thermo-mechanically affected zone on the second electrical steel strip side, such as the joined portion or the base metal portion, such a region is excluded from the measurement region.

Further, the measurement regions of ferrite grain size of the base metal portions of the first electrical steel strip and the second electrical steel strip (hereinafter also referred to as the first electrical steel strip and second electrical steel strip base metal portion measurement regions) may be, on the cross section, a region of ±0.2 × t1 from the mid-thickness position of the base metal portion of the first electrical steel strip (level in the thickness (vertical) direction) and a region of ±0.2 × t2 from the mid-thickness position of the base metal portion of the second electrical steel strip (level in the thickness (vertical) direction), respectively. The position along the perpendicular-to-joining (horizontal) direction may be selected arbitrarily, as long as the position is in the base metal portion. Here, t1 and t2 are the thicknesses of the first electrical steel strip and the second electrical steel strip, respectively.

Examples of joint types include butt joints and lap joints.

[3] Method of producing electrical steel strip

The following describes a method of producing an electrical steel strip according to an embodiment of the present disclosure.

The method of producing an electrical steel strip according to an embodiment of the present disclosure includes:

joining a first electrical steel strip and a second electrical steel strip by the above-described electrical steel strip friction stir welding method according to an embodiment of the present disclosure to obtain a joined steel strip; and cold rolling the joined steel strip to obtain a cold-rolled steel strip.

Here, the joined steel strip preferably includes the first electrical steel strip, the second electrical steel strip, and the electrical steel strip welded joint of [2] above, where the first electrical steel strip and the second electrical steel strip are joined via the electrical steel strip welded joint.

Further, cold rolling conditions are not particularly limited, and may be in accordance with a conventional method. Further, pickling may optionally be performed after joining the first electrical steel strip and the second electrical steel strip and before cold rolling.

[4] Friction stir welding device

The following describes a friction stir welding device according to an embodiment of the present disclosure.

The friction stir welding device according to an embodiment of the present disclosure is a friction stir welding device used for the electrical steel strip friction stir welding method of [1] above, including:

a gripping device that grips the material to be joined,
a pair of rotating tools facing each other,
a driving device that enables the rotating tools to rotate and move in the joining direction,
a heating device disposed in front of the rotating tools in the joining traveling direction on at least one side of the material to be joined, and
an operation control device for the gripping device, the driving device for the rotating tools, and the heating device.

Here, the gripping device may be, for example:

a gripping device having a movable gripping member, and a sliding device of the movable gripping member; or
a gripping device having a fixed gripping member, a movable gripping member, and a sliding device of the movable gripping member.

The rotating tool may be as exemplified in the electrical steel strip friction stir welding method of [1] above.
The driving device for the rotating tools may be one having a rotation driving unit for the rotating tools and a moving device for moving the rotating tools in the joining direction. The driving method of the rotation driving unit and the moving device is not particularly limited, and may be an electric driving method, for example.
The heating device may be as exemplified in the electrical steel strip friction stir welding method of [1] above. The heating device is accompanied by a moving device that moves the heating device in the joining direction in conjunction with the rotating tools. The driving method of the moving device is not particularly limited, and may be an electric driving method, for example.
The operation control device may be one having an input unit for inputting data such as various set values, an arithmetic unit for processing the input data, a memory unit for storing the data and the like, and an output unit for outputting operation signals to the gripping device, the driving device for the rotating tools, and the heating device based on arithmetic processing results of the arithmetic unit.
From the viewpoint of controlling the preheating temperature of the material to be joined within the ranges of the above Expressions (11) to (15), it is preferable to further include a temperature measuring device that measures $TP_{W=0}$, $TP_{W=0.2D}$ and $TP_{W=0.5D}$ on both sides of the material to be joined. Examples of such a temperature measuring device include one in which multiple radiation thermometers are installed for measuring $TP_{W=0}$, $TP_{W=0.2D}$ and $TP_{W=0.5D}$, and thermography (set to measure temperatures covering a temperature range including $TP_{W=0}$, $TP_{W=0.2D}$ and $TP_{W=0.5D}$).
The device configuration other than the above is not particularly limited, and may be a conventionally known friction stir welding device configuration.

[5] Electrical steel strip production device

The following describes an electrical steel strip production device according to an embodiment of the present disclosure.
The electrical steel strip production device according to an embodiment of the present disclosure includes the friction stir welding device of [4] above.
In the electrical steel strip production device according to an embodiment of the present disclosure, in a continuous cold rolling line, the friction stir welding device of [4] above is disposed upstream of a cold rolling device, or upstream of a pickling device and a cold rolling device (in the order of friction stir welding device, pickling device, and cold rolling device from the upstream side). The pickling device and cold rolling device may suitably be those commonly used in a continuous cold rolling line for electrical steel strip.
A continuous cold rolling line is a production line that continuously cold-rolls a steel strip using a cold rolling device. A continuous cold rolling line includes, for example, a steel strip conveyor and a cold rolling device. A continuous cold rolling line may optionally be accompanied by a pickling device, an annealing furnace, a coating device, and the like.
The device configuration other than the above is not particularly limited, and may be a conventionally known electrical steel strip production device configuration.

EXAMPLES

Functions and effects of the present disclosure are described below with reference to Examples. However, the present disclosure is not limited to the following Examples.
Electrical steel strips having the chemical compositions listed in Table 1 (the balance being Fe and inevitable impurity) were used as the material to be joined (the first electrical steel strip and the second electrical steel strip). The first electrical steel strip (preceding steel strip) and the second electrical steel strip (trailing steel strip) were preheated and then joined by preheated friction stir welding under the preheating conditions listed in Table 2 and the joining conditions listed in Table 3, simulating being on a continuous cold rolling line, to produce the electrical steel strip welded joint. In the case of butt joining, the groove was a so-called I-type groove with no groove angle to the ends of the two electrical steel strips to be joined, and the two electrical steel strips were butted and joined with a surface state equivalent to that of milling. The same was true for Tables 3 and 4 below. Average values of ferrite grain size, average values of hardness, and Erichsen values of the base metal portion of the electrical steel strips are also listed in Table 1. Here, the average values of ferrite grain size and the average values of hardness of the base metal portion of the electrical steel strips were obtained by the methods described above. Further, the Erichsen values were measured in accordance with the Erichsen test method specified in JIS Z 2247. Conditions not specified were set in accordance with conventional methods.

In the preheating process, the heating device was moved in the joining direction in conjunction with the rotating tools (at the same speed as the joining speed). A high-frequency induction heating device was used as the heating device. More specifically, a high-frequency power supply with a maximum output of 100 kW and a frequency band of 70 kHz to 90 kHz was connected to a rectangular induction heating coil of 100 mm long and 30 mm wide. The induction heating coil was installed so that its 100-mm-long sides were parallel to the joining travelling direction and 10 mm away from the surface in the thickness direction on one side or both sides of the material to be joined. Regarding the arrangement of heating device in Table 2, "single-sided" meant that the heating device was arranged on only one side (front side) of the material to be joined, and "double-sided" meant that the heating device was arranged on both sides (both front side and back side) of the material to be joined. Preheating temperature was measured on both sides of the material to be joined by thermography provided in the friction stir welding device. The measured preheating temperatures of the material to be joined are also listed in Table 2. $TP_{W=0.2D}$ and $TP_{W=0.5D}$ were measured both on the advancing side (first electrical steel strip side) and the retreating side (second electrical steel strip side) across the joining center line, and the temperatures were almost the same. Therefore, only the temperatures measured on the advancing side are listed here as representative. For comparison, preheating was not performed in some sets of conditions.

In the joining process, the front side rotating tool disposed on the vertically upper side was rotated clockwise when viewed from the vertically upper side, and the back side rotating tool disposed on the vertically lower side was rotated counterclockwise when viewed from the vertically upper side. That is, both were rotated counterclockwise when viewed from in front of the lead end of the rotating tool. Further, in each case, one of the two rotating tools with the cross section dimensions and shapes illustrated in FIG. 2A and FIG. 2B was used. Further, the front side rotating tool and the back side rotating tool had the same cross section dimensions and shape as each other. Each of the rotating tools was made of tungsten carbide (WC) with a Vickers hardness of HV 1090, which was harder than the material to be joined. Further, when the thicknesses of the first electrical steel strip and the second electrical steel strip were different, the butted portion of the first electrical steel strip and the second electrical steel strip was made with the back side (the side where the back side rotating tool was disposed) having no step and the front side (the side where the front side rotating tool was disposed) having a step. The joining was performed with the first electrical steel strip (preceding steel strip) as advancing side and the second electrical steel strip (trailing steel strip) as retreating side.

In the case of lap joining, the joining was performed so that the first electrical steel strip (preceding steel strip) was the upper side of the overlap and the second electrical steel strip (trailing steel strip) was the lower side of the overlap. The direction of rotation of the rotating tool, the shape of the rotating tool, and the like were the same as in the case of butt joining.

For comparison, the material to be joined (the first electrical steel strip and the second electrical steel strip) listed in Table 4 was joined by laser welding under the conditions listed in Table 4 to produce an electrical steel strip welded joint.

For the laser welding, a $CO_2$ laser oscillator with a maximum output of 5.5 kW was used. Helium was used as the shielding gas, and the shielding gas flow rate was 40 L/min. In Table 4, an entry of "no" under "filler wire addition" indicates welding without filler wire. Further, in Table 4, an entry of "yes" under "filler wire addition" indicates welding using a metal inert gas (MIG) welding wire (0.9 mm diameter) having a chemical composition listed in Table 5 (the balance being Fe and inevitable impurity) as filler wire.

For the electrical steel strip welded joints thus obtained, the joined portion, the thermo-mechanically affected zone, and the base metal portion were defined as described above.

Further, the following were measured as described above:

Dsz: average value ($\mu$m) of ferrite grain size of the joined portion,
Dhaz1: average value ($\mu$m) of ferrite grain size of the thermo-mechanically affected zone on the first electrical steel strip side,
Dhaz2: average value ($\mu$m) of ferrite grain size of the thermo-mechanically affected zone on the second electrical steel strip side,
Dbm1: average value ($\mu$m) of ferrite grain size of the base metal portion of the first electrical steel strip,
Dbm2: average value ($\mu$m) of ferrite grain size of the base metal portion of the second electrical steel strip,
Hsz: average value of hardness of the joined portion,
Hbm1: average value of hardness of the base metal portion of the first electrical steel strip, and
Hbm2: average value of hardness of the base metal portion of the second electrical steel strip.

Further, in a cross section in the vertical direction of each electrical steel strip welded joint (the plane illustrated in FIG. 3 (that is, the plane including the perpendicular-to-joining direction and the thickness direction)), TszL: minimum value (mm) of joined portion thickness and TszH: maximum value (mm) of joined portion thickness were measured.

In the electrical steel strip welded joint obtained by laser welding, the welded portion was regarded as the joined portion and the heat-affected zone as the thermo-mechanically affected zone for the above measurements. The measurement procedures and the like were the same as that for an electrical steel strip welded joint obtained by friction stir welding.

The results are listed in Tables 6 and 7. The above measurements were omitted when defects were identified in the checking of surface defects and internal defects described below. Further, when surface defects were identified, checking of internal defects was also omitted.

The electrical steel strip welded joints were checked for (I) presence of surface defects and (II) presence of internal defects according to the following procedures. Results are listed in Table 8.

(I) Presence of surface defects

The front side and back side of the joined portion and the thermo-mechanically affected zone (in the case of laser welding, the welded portion and the heat-affected zone) of the electrical steel strip welded joints were visually checked for the presence of an unjoined state and cracking. The presence or absence of surface defects was then judged according to the following criteria.

Surface defect: no meant that an unjoined state and cracking were not identified.

Surface defect: yes meant that at least one of an unjoined state or cracking was identified.

(II) Presence of internal defects

The electrical steel strip welded joints were cut in the thickness (vertical) direction so that the plane illustrated in FIG. 3 (that is, the plane including the perpendicular-to-joining direction and the thickness direction) became the observation plane, and test pieces were collected. The cutting positions along the joining direction were 20 mm from an end of the material to be joined on a side where joining (welding) started, 20 mm from an end of the material to be joined on a side where joining (welding) ended, and in the middle of both ends of the material to be joined. For each electrical steel strip welded joint, a total of three test pieces were collected such that the cross sections at the cutting positions became observation planes. The observation plane of each obtained test piece was then observed under an optical microscope (magnification: $10\times$). The presence or absence of internal defects was then judged according to the following criteria.

Internal defect: no meant that an unjoined state and cracking were not identified in the joined portion of all three test pieces.

Internal defect: yes meant that at least one of an unjoined state or cracking was identified in the joined portion in at least one of the test pieces.

The electrical steel strip welded joints were evaluated for effectiveness in inhibiting the occurrence of coil joint fractures in a production line (hereinafter also referred to as fracture inhibition effect) in the following way.

Test pieces were collected from each of the electrical steel strip welded joints so that the joined portion, the thermo-mechanically affected zone and base metal on the first electrical steel strip side, and the thermo-mechanically affected zone and base metal on the second electrical steel strip side were included. Then, using the collected test pieces, the Erichsen values of the welded joints were measured in accordance with the Erichsen test method specified in JIS Z 2247. The ratio of the Erichsen value of the welded joint to the Erichsen value of the base metal portion (hereinafter also referred to as the Erichsen value ratio) was used to evaluate the fracture inhibition effect based on the following criteria. Results are listed in Table 8.

[Erichsen value ratio (%)] = [Erichsen value of welded joint] / [Erichsen value of base metal portion] $\times$ 100

O (Pass): Erichsen value ratio of 80 % or more
$\times$ (Fail): Erichsen value ratio of less than 80 %.

When the Erichsen value of the base metal portion of the first electrical steel strip and the Erichsen value of the base metal portion of the second electrical steel strip were different, the Erichsen value of the base metal portion was considered to be the smaller of the Erichsen value of the base metal portion of the first electrical steel strip and the Erichsen value of the base metal portion of the second electrical steel strip.

[Table 1]

Table 1

| Steel sample ID | Thickness (mm) | Chemical composition (mass%) | | | | | Average ferrite grain size in base metal portion ($\mu$m) | Average hardness of base metal portion (HV) | Erichsen value of base metal portion (mm) |
|---|---|---|---|---|---|---|---|---|---|
| | | C | Si | Mn | P | S | | | |
| B1-1 | 2.0 | 0.02 | 2.5 | 0.01 | 0.015 | 0.006 | 280 | 219 | 12.4 |
| B1-2 | 2.6 | 0.02 | 2.5 | 0.01 | 0.015 | 0.006 | 280 | 219 | 13.5 |
| B2-1 | 2.0 | 0.01 | 3.5 | 0.02 | 0.012 | 0.006 | 310 | 242 | 3.5 |
| B2-2 | 2.6 | 0.01 | 3.5 | 0.02 | 0.012 | 0.006 | 310 | 242 | 3.8 |

[Table 2]

Table 2

| Preheating conditions | Joint type | Material to be joined | | | | | | Arrangement of heating device | Moving speed (mm/min) | Preheating conditions | | | |
| | | First electrical steel strip | | Second electrical steel strip | | t (mm) | TJ (mm) | | | Front side | | Back side | |
| | | Steel sample ID | Thickness t1 (mm) | Steel sample ID | Thickness t2 (mm) | | | | | Frequency (kHz) | Output (kW) | Frequency (kHz) | Output (kW) |
|---|---|---|---|---|---|---|---|---|---|---|---|---|---|
| 1 | Butt | B2-1 | 2.0 | B1-1 | 2.0 | 2.0 | 2.0 | Single-sided | 3500 | 104 | 12 | - | - |
| 2 | Butt | B1-1 | 2.0 | B1-1 | 2.0 | 2.0 | 2.0 | Double-sided | 6000 | 104 | 12 | 104 | 12 |
| 3 | Butt | B1-1 | 2.0 | B1-1 | 2.0 | 2.0 | 2.0 | Single-sided | 5000 | 98 | 22 | - | - |
| 4 | Butt | B2-1 | 2.0 | B2-1 | 2.0 | 2.0 | 2.0 | Double-sided | 6000 | 98 | 22 | 98 | 22 |
| 5 | Butt | B2-1 | 2.0 | B2-1 | 2.0 | 2.0 | 2.0 | Single-sided | 4000 | 83 | 46 | - | - |
| 6 | Butt | B1-2 | 2.6 | B1-2 | 2.6 | 2.6 | 2.6 | Double-sided | 5000 | 83 | 46 | 83 | 46 |
| 7 | Butt | B1-2 | 2.6 | B1-2 | 2.6 | 2.6 | 2.6 | Single-sided | 5000 | 83 | 46 | - | - |
| 8 | Butt | B2-2 | 2.6 | B2-2 | 2.6 | 2.6 | 2.6 | Double-sided | 6000 | 83 | 46 | 83 | 46 |
| 9 | Butt | B2-2 | 2.6 | B2-2 | 2.6 | 2.6 | 2.6 | Single-sided | 6000 | 53 | 97 | - | - |
| 10 | Butt | B2-2 | 2.6 | B2-2 | 2.6 | 2.6 | 2.6 | Double-sided | 6000 | 53 | 97 | 53 | 97 |
| 11 | Lap | B1-1 | 2.0 | B1-1 | 2.0 | 2.0 | 4.0 | Double-sided | 3500 | 98 | 22 | 98 | 22 |

Table 2 (cont'd)

| Preheating conditions | Joint type | Preheating temperature (°C) | | | | | | | | | | Expression (11) | Expression (12) | Expression (13) | Expression (14) | Expression (15) |
|---|---|---|---|---|---|---|---|---|---|---|---|---|---|---|---|---|
| | | Front side | | | | | Back side | | | | | | | | | |
| | | $TP_{w=0}$ | $TP_{w=0.2D}$ | $TP_{w=0.5D}$ | $TP_{w=0.2D}/TP_{w=0}$ | $TP_{w=0.5D}/TP_{w=0}$ | $TP_{w=0}$ | $TP_{w=0.2D}$ | $TP_{w=0.5D}$ | $TP_{w=0.2D}/TP_{w=0}$ | $TP_{w=0.5D}/TP_{w=0}$ | | | | | |
| 1 | Butt | **80** | **60** | **30** | 0.75 | 0.38 | **60** | **40** | **30** | **0.67** | **0.50** | × | × | × | × | × |
| 2 | Butt | 140 | 110 | 60 | 0.79 | 0.43 | 140 | 110 | 60 | 0.79 | 0.43 | O | O | O | O | O |
| 3 | Butt | 170 | 120 | 60 | 0.71 | 0.35 | 130 | 100 | 50 | 0.77 | 0.38 | O | O | O | O | O |
| 4 | Butt | 300 | 220 | 100 | 0.73 | 0.33 | 300 | 220 | 100 | 0.73 | 0.33 | O | O | O | O | O |
| 5 | Butt | 500 | 400 | 210 | 0.80 | 0.42 | 420 | 320 | 150 | 0.76 | 0.36 | O | O | O | O | O |
| 6 | Butt | 590 | 470 | 250 | 0.80 | 0.42 | 590 | 470 | 250 | 0.80 | 0.42 | O | O | O | O | O |
| 7 | Butt | 440 | 350 | 170 | 0.80 | 0.39 | 350 | 280 | 120 | 0.80 | 0.34 | O | O | O | O | O |
| 8 | Butt | 500 | 400 | 210 | 0.80 | 0.42 | 500 | 400 | 210 | 0.80 | 0.42 | O | O | O | O | O |
| 9 | Butt | 990 | 910 | 400 | 0.92 | 0.40 | 910 | 820 | 350 | 0.90 | 0.38 | O | O | O | O | O |
| 10 | Butt | **1180** | 800 | 550 | **0.68** | **0.47** | **1180** | 800 | 550 | **0.68** | **0.47** | × | O | O | × | × |
| 11 | Lap | 450 | 352 | 170 | 0.78 | 0.38 | 450 | 352 | 170 | 0.78 | 0.38 | O | O | O | O | O |

O Satisfies the relationship in the Expression

× Does not satisfy the relationship in the Expression

Table 3

[Table 3]

| | Joint type | Material to be joined | | | | t (mm) | TJ (mm) | Preheating conditions | Rotating tool | | | | Joining conditions | | | | | | Expression (7) | Expression (8) | Expression (9) | Expression (10) |
|---|---|---|---|---|---|---|---|---|---|---|---|---|---|---|---|---|---|---|---|---|---|---|
| | | First electrical steel strip | | Second electrical steel strip | | | | | Shape | Shoulder diameter D (mm) | Pin diameter (mm) | Pin length (mm) | Tilt angle α (°) | Gap between shoulders G (mm) | Rotation speed RS (r/min) | | Joining speed JS (mm/min) | RS×D³/ JS | | | | |
| | | Steel sample ID | Thickness t1 (mm) | Steel sample ID | Thickness t2 (mm) | | | | | | | | | | Front side | Back side | | | | | | |
| Example 1 | Butt | B1-1 | 2.0 | B1-1 | 2.0 | 2.0 | 2.0 | 2 | FIG. 2A | 13 | 4 | 0.6 | 1.5 | 1.20 | 3000 | 3000 | 6000 | 1099 | O | O | O | O |
| Example 2 | Butt | B1-1 | 2.0 | B1-1 | 2.0 | 2.0 | 2.0 | 3 | FIG. 2B | 20 | 6.7 | 0.9 | 1 | 1.50 | 1700 | 1700 | 5000 | 2720 | O | O | O | O |
| Example 3 | Butt | B2-1 | 2.0 | B2-1 | 2.0 | 2.0 | 2.0 | 4 | FIG. 2A | 13 | 4 | 0.6 | 1.5 | **0.90** | 2500 | 2500 | 6000 | 915 | O | O | O | × |
| Example 4 | Butt | B2-1 | 2.0 | B2-1 | 2.0 | 2.0 | 2.0 | 5 | FIG. 2B | 20 | 6.7 | 0.9 | 1.5 | **1.90** | 1000 | 1000 | 4000 | 2000 | O | O | O | × |
| Example 5 | Butt | B1-2 | 2.6 | B1-2 | 2.6 | 2.6 | 2.6 | 6 | FIG. 2A | 13 | 4 | 0.6 | 2 | 1.80 | 1800 | 1800 | 5000 | 791 | O | O | O | O |
| Example 6 | Butt | B1-2 | 2.6 | B1-2 | 2.6 | 2.6 | 2.6 | 7 | FIG. 2B | 20 | 6.7 | 0.9 | 1.5 | 2.00 | 800 | 800 | 5000 | 1280 | O | O | O | O |
| Example 7 | Butt | B2-2 | 2.6 | B2-2 | 2.6 | 2.6 | 2.6 | 8 | FIG. 2A | 13 | 4 | 0.6 | 1.5 | 2.20 | 2200 | 2200 | 6000 | 806 | O | O | O | O |
| Example 8 | Butt | B2-2 | 2.6 | B2-2 | 2.6 | 2.6 | 2.6 | 9 | FIG. 2A | 13 | 4 | 0.6 | 1.5 | **2.40** | 2000 | 2000 | 6000 | 732 | O | O | O | × |
| Example 9 | Butt | B2-1 | 2.0 | B1-1 | 2.0 | 2.0 | 2.0 | **1** | FIG. 2B | 20 | 6.7 | 0.9 | 1.5 | 1.50 | 1300 | 1300 | 3500 | 2971 | O | O | O | O |
| Example 10 | Butt | B2-2 | 2.6 | B2-2 | 2.6 | 2.6 | 2.6 | **10** | FIG. 2A | 13 | 4 | 0.6 | 1.5 | 1.70 | 2200 | 2200 | 6000 | 806 | O | O | O | O |
| Example 11 | Lap | B1-1 | 2.0 | B1-1 | 2.0 | 2.0 | 4.0 | 11 | FIG. 2B | 20 | 6.7 | 0.9 | 1.5 | 3.00 | 2000 | 2000 | 3500 | 4571 | O | O | O | O |
| Comparative Example 1 | Butt | B1-1 | 2.0 | B2-1 | 2.0 | 2.0 | 2.0 | **No preheating** | FIG. 2A | 13 | 4 | 0.6 | 1 | 1.20 | 3000 | 3000 | 6000 | 1099 | O | O | O | O |
| Comparative Example 2 | Butt | B1-2 | 2.6 | B2-2 | 2.6 | 2.6 | 2.6 | **No preheating** | FIG. 2B | 20 | 6.7 | 0.9 | 2 | **1.10** | 800 | 800 | 5000 | 1280 | O | O | O | × |
| Comparative Example 3 | Lap | B1-1 | 2.0 | B1-1 | 2.0 | 2.0 | 4.0 | **No preheating** | FIG. 2B | 20 | 6.7 | 0.9 | 1.5 | 3.00 | 2000 | 2000 | 3500 | 4571 | O | O | O | O |

O Satisfies the relationship in the Expression

× Does not satisfy the relationship in the Expression

[Table 4]

[Table 4]

Table 4

| | Joint type | Joining method | Material to be joined | | | | t (mm) | TJ (mm) | Joining conditions | | | | Filler wire addition | |
| | | | First electrical steel strip | | Second electrical steel strip | | | | Gap between electrical steel strips (mm) | Laser output (kW) | Laser beam diameter (mm) | Welding speed (mm/min) | Yes or no | Wire feed speed (m/min) |
| | | | Steel sample ID | Thickness t1 (mm) | Steel sample ID | Thickness t2 (mm) | | | | | | | | |
|---|---|---|---|---|---|---|---|---|---|---|---|---|---|---|
| Comparative Example 4 | Butt | Laser | B1-1 | 2.0 | B1-1 | 2.0 | 2.0 | 2.0 | 0 | 2.5 | 0.5 | 1500 | No | - |
| Comparative Example 5 | Butt | Laser | B1-2 | 2.6 | B1-2 | 2.6 | 2.6 | 2.6 | 0 | 3.0 | 0.5 | 1250 | No | - |
| Comparative Example 6 | Butt | Laser | B2-1 | 2.0 | B2-1 | 2.0 | 2.0 | 2.0 | 0 | 2.5 | 0.5 | 1500 | No | - |
| Comparative Example 7 | Butt | Laser | B2-2 | 2.6 | B2-2 | 2.6 | 2.6 | 2.6 | 0 | 3.0 | 0.5 | 1250 | No | - |
| Comparative Example 8 | Butt | Laser | B1-1 | 2.0 | B1-1 | 2.0 | 2.0 | 2.0 | 0.3 | 5.0 | 0.5 | 1300 | Yes | 3.0 |
| Comparative Example 9 | Butt | Laser | B1-2 | 2.6 | B1-2 | 2.6 | 2.6 | 2.6 | 0.3 | 5.0 | 0.5 | 1000 | Yes | 3.0 |
| Comparative Example 10 | Butt | Laser | B2-1 | 2.0 | B2-1 | 2.0 | 2.0 | 2.0 | 0.3 | 5.0 | 0.5 | 1300 | Yes | 3.0 |
| Comparative Example 11 | Butt | Laser | B2-2 | 2.6 | B2-2 | 2.6 | 2.6 | 2.6 | 0.3 | 5.0 | 0.5 | 1000 | Yes | 3.0 |
| Comparative Example 12 | Butt | Laser | B1-1 | 2.0 | B2-1 | 2.0 | 2.0 | 2.0 | 0.3 | 5.0 | 0.5 | 1300 | Yes | 3.0 |
| Comparative Example 13 | Butt | Laser | B1-2 | 2.6 | B2-2 | 2.6 | 2.6 | 2.6 | 0.3 | 5.0 | 0.5 | 1000 | Yes | 3.0 |

[Table 5]

Table 5

| Ref. sign | Chemical composition (mass%) | | | | | | | | | |
|---|---|---|---|---|---|---|---|---|---|---|
| | C | Si | Mn | Al | Ti | Ni | Cr | Mo | Nb+Ta | Balance |
| F1 | 0.02 | 0.29 | 0.07 | 0.15 | 0.17 | 61.3 | 22.2 | 9.2 | 3.51 | Fe and impurity |

Table 6

[Table 6]

| | Joint type | Material to be joined | | | | | | | | TbmL (mm) | TbmH (mm) | Joined portion | | | | | Thermo-mechanically affected zone | | | |
|---|---|---|---|---|---|---|---|---|---|---|---|---|---|---|---|---|---|---|---|---|
| | | First electrical steel strip | | | | Second electrical steel strip | | | | | | Ferrite phase area ratio (%) | Dsz (µm) | Hsz | TszL (mm) | TszH (mm) | First electrical steel strip side | | Second electrical steel strip side | |
| | | Steel sample ID | Dbm1 (µm) | Hbm1 | Thickness (mm) | Steel sample ID | Dbm2 (µm) | Hbm2 | Thickness (mm) | | | | | | | | Ferrite phase area ratio (%) | Dhaz1 (µm) | Ferrite phase area ratio (%) | Dhaz2 (µm) |
| Example 1 | Butt | B1-1 | 280 | 219 | 2.0 | B1-1 | 280 | 219 | 2.0 | 2.0 | 2.0 | 99 | 75 | 248 | 1.9 | 2.0 | 99 | 201 | 99 | 203 |
| Example 2 | Butt | B1-1 | 280 | 219 | 2.0 | B1-1 | 280 | 219 | 2.0 | 2.0 | 2.0 | 99 | 95 | 240 | 1.8 | 2.0 | 99 | 208 | 99 | 210 |
| Example 3 | Butt | B2-1 | 310 | 242 | 2.0 | B2-1 | 310 | 242 | 2.0 | 2.0 | 2.0 | 99 | 83 | 251 | **1.5** | 1.9 | 99 | 240 | 99 | 235 |
| Example 4 | Butt | B2-1 | 310 | 242 | 2.0 | B2-1 | 310 | 242 | 2.0 | 2.0 | 2.0 | 99 | 165 | 247 | 1.9 | 2.0 | 99 | 287 | 99 | 290 |
| Example 5 | Butt | B1-2 | 280 | 219 | 2.6 | B1-2 | 280 | 219 | 2.6 | 2.6 | 2.6 | 99 | 91 | 235 | 2.2 | 2.7 | 99 | 204 | 99 | 206 |
| Example 6 | Butt | B1-2 | 280 | 219 | 2.6 | B1-2 | 280 | 219 | 2.6 | 2.6 | 2.6 | 99 | 108 | 234 | 2.5 | 2.6 | 99 | 210 | 99 | 208 |
| Example 7 | Butt | B2-2 | 310 | 242 | 2.6 | B2-2 | 310 | 242 | 2.6 | 2.6 | 2.6 | 99 | 151 | 244 | 2.5 | 2.6 | 99 | 273 | 99 | 278 |
| Example 8 | Butt | B2-2 | 310 | 242 | 2.6 | B2-2 | 310 | 242 | 2.6 | 2.6 | 2.6 | 99 | 178 | 245 | 2.6 | 2.6 | 99 | 291 | 99 | 295 |
| Example 9 | Butt | B2-1 | 310 | 242 | 2.0 | B1-1 | 280 | 219 | 2.0 | 2.0 | 2.0 | 99 | 70 | 248 | 1.6 | 2.3 | 99 | 200 | 99 | 198 |
| Example 10 | Butt | B2-2 | 310 | 242 | 2.6 | B2-2 | 310 | 242 | 2.6 | 2.6 | 2.6 | 99 | 198 | 242 | 2.2 | 2.6 | 99 | 308 | 99 | 307 |
| Example 11 | Lap | B1-1 | 280 | 219 | 2.0 | B1-1 | 280 | 219 | 2.0 | 2.0 | 2.0 | 99 | 167 | 224 | 3.5 | 3.8 | 99 | 253 | 99 | 251 |
| Comparative Example 1 | Butt | B1-1 | 280 | 219 | 2.0 | B2-1 | 310 | 242 | 2.0 | 2.0 | 2.0 | - | - | - | - | - | - | - | - | - |
| Comparative Example 2 | Butt | B1-2 | 280 | 219 | 2.6 | B2-2 | 310 | 242 | 2.6 | 2.6 | 2.6 | - | - | - | - | - | - | - | - | - |
| Comparative Example 3 | Lap | B1-1 | 280 | 219 | 2.0 | B1-1 | 280 | 219 | 2.0 | 2.0 | 2.0 | - | - | - | - | - | - | - | - | - |

[Table 7]

Table 7

| | Joint type | Joining method | Material to be joined | | | | | | | | | | | Joined portion | | | | | Thermo-mechanically affected zone | | | |
| | | | First electrical steel strip | | | | Second electrical steel strip | | | | TbmL (mm) | TbmH (mm) | | Ferrite phase area ratio (%) | Dsz (μm) | Hsz | TszL (mm) | TszH (mm) | First electrical steel strip side | | Second electrical steel strip side | |
| | | | Steel sample ID | Dbm1 (μm) | Hbm1 | Thickness (mm) | Steel sample ID | Dbm2 (μm) | Hbm2 | Thickness (mm) | | | | | | | | | Ferrite phase area ratio (%) | Dhaz1 (μm) | Ferrite phase area ratio (%) | Dhaz2 (μm) |
| Comparative Example 4 | Butt | Laser | B1-1 | 280 | 219 | 2.0 | B1-1 | 280 | 219 | 2.0 | 2.0 | 2.0 | | 99 | 410 | 218 | 1.9 | 2.2 | 99 | 310 | 99 | 327 |
| Comparative Example 5 | Butt | Laser | B1-2 | 280 | 219 | 2.6 | B1-2 | 280 | 219 | 2.6 | 2.6 | 2.6 | | 99 | 453 | 215 | 2.6 | 2.7 | 99 | 326 | 99 | 321 |
| Comparative Example 6 | Butt | Laser | B2-1 | 310 | 242 | 2.0 | B2-1 | 310 | 242 | 2.0 | 2.0 | 2.0 | | 99 | 437 | 240 | 2.0 | 2.1 | 99 | 351 | 99 | 346 |
| Comparative Example 7 | Butt | Laser | B2-2 | 310 | 242 | 2.6 | B2-2 | 310 | 242 | 2.6 | 2.6 | 2.6 | | 99 | 440 | 238 | 2.5 | 2.8 | 99 | 367 | 99 | 372 |
| Comparative Example 8 | Butt | Laser | B1-1 | 280 | 219 | 2.0 | B1-1 | 280 | 219 | 2.0 | 2.0 | 2.0 | | 43 | 23 | 271 | 2.0 | 2.7 | 99 | 338 | 99 | 362 |
| Comparative Example 9 | Butt | Laser | B1-2 | 280 | 219 | 2.6 | B1-2 | 280 | 219 | 2.6 | 2.6 | 2.6 | | 40 | 31 | 265 | 2.6 | 3.5 | 99 | 359 | 99 | 355 |
| Comparative Example 10 | Butt | Laser | B2-1 | 310 | 242 | 2.0 | B2-1 | 310 | 242 | 2.0 | 2.0 | 2.0 | | 49 | 19 | 283 | 2.0 | 2.5 | 99 | 388 | 99 | 395 |
| Comparative Example 11 | Butt | Laser | B2-2 | 310 | 242 | 2.6 | B2-2 | 310 | 242 | 2.6 | 2.6 | 2.6 | | 46 | 28 | 278 | 2.6 | 3.5 | 99 | 399 | 99 | 413 |
| Comparative Example 12 | Butt | Laser | B1-1 | 280 | 219 | 2.0 | B2-1 | 310 | 242 | 2.0 | 2.0 | 2.0 | | 45 | 25 | 276 | 2.0 | 2.5 | 99 | 352 | 99 | 392 |
| Comparative Example 13 | Butt | Laser | B1-2 | 280 | 219 | 2.6 | B2-2 | 310 | 242 | 2.6 | 2.6 | 2.6 | | 48 | 21 | 281 | 2.6 | 3.3 | 99 | 377 | 99 | 401 |

## [Table 8]

Table 8

| | Expression (1) | Expression (2) | Expression (3) | Expression (4) | Expression (5) | Expression (6) | Surface defect | Internal defect | Erichsen value of welded joint (mm) | Erichsen value ratio (%) |
|---|---|---|---|---|---|---|---|---|---|---|
| Example 1 | O | O | O | O | O | O | No | No | 12.1 | 98 |
| Example 2 | O | O | O | O | O | O | No | No | 11.6 | 94 |
| Example 3 | O | O | O | O | × | O | No | No | 3.2 | 91 |
| Example 4 | O | O | O | O | O | O | No | No | 2.9 | 83 |
| Example 5 | O | O | O | O | O | O | No | No | 13.1 | 97 |
| Example 6 | O | O | O | O | O | O | No | No | 13.4 | 99 |
| Example 7 | O | O | O | O | O | O | No | No | 3.2 | 84 |
| Example 8 | O | O | O | O | O | O | No | No | 3.2 | 84 |
| Example 9 | O | O | O | O | O | O | No | No | 3.3 | 94 |
| Example 10 | O | O | O | O | O | O | No | No | 3.1 | 82 |
| Example 11 | O | O | O | O | O | O | No | No | 10.1 | 81 |
| Comparative Example 1 | - | - | - | - | - | - | No | **Yes** | - | - |
| Comparative Example 2 | - | - | - | - | - | - | No | **Yes** | - | - |
| Comparative Example 3 | - | - | - | - | - | - | No | **Yes** | - | - |
| Comparative Example 4 | × | × | × | O | O | O | No | No | 9.5 | **77** |
| Comparative Example 5 | × | × | × | O | O | O | No | No | 10.0 | **74** |
| Comparative Example 6 | × | × | × | O | O | O | No | No | 1.1 | **31** |
| Comparative Example 7 | × | × | × | O | O | O | No | No | 2.3 | **61** |
| Comparative Example 8 | O | × | × | × | O | × | No | No | 9.8 | **79** |
| Comparative Example 9 | O | × | × | × | O | × | No | No | 9.7 | **72** |
| Comparative Example 10 | O | × | × | O | O | O | No | No | 2.5 | **71** |
| Comparative Example 11 | O | × | × | O | O | × | No | No | 2.2 | **58** |
| Comparative Example 12 | O | × | × | O | O | O | No | No | 2.3 | **66** |
| Comparative Example 13 | O | × | × | × | O | O | No | No | 2.6 | **68** |

O Satisfies the relationship in the Expression
× Does not satisfy the relationship in the Expression

Table 8 indicates that for all of the Examples, electrical steel strip welded joints were obtained that were free of defects and had excellent fracture inhibition effects, while performing joining at a high joining speed of 3500 mm/min or more.

On the other hand, for each of the Comparative Examples, either defects occurred or a sufficient fracture inhibition effect was not achieved when performing joining at a joining speed of 3500 mm/min or more.

REFERENCE SIGNS LIST

1 first electrical steel strip (material to be joined)
2 second electrical steel strip (material to be joined)
3-1 rotating tool (front side rotating tool)
3-2 rotating tool (back side rotating tool)
4 joined portion
4-1 thermo-mechanically affected zone (first electrical steel strip side)
4-2 thermo-mechanically affected zone (second electrical steel strip side)
5-1, 5-2 shoulder
6-1, 6-2 probe
7 gripping device
9-1, 9-2 lead end
10-1 heating device (front side heating device)
10-2 heating device (back side heating device)
11 driving device for the rotating tools
12 operation control device

**Claims**

1. An electrical steel strip friction stir welding method for joining a first electrical steel strip and a second electrical steel strip as a material to be joined by a pair of rotating tools facing each other, comprising:

    a preheating process of preheating an unjoined portion of the material to be joined by a heating device disposed in front of the rotating tools in a joining direction on at least one side of the material to be joined; and
    a joining process of pressing the rotating tools into the unjoined portion of the material to be joined from both sides while rotating the rotating tools in opposite directions, and joining the first electrical steel strip and the second electrical steel strip by moving the rotating tools in the joining direction, wherein
    the unjoined portion of the material to be joined is a butted portion or an overlapped portion between an end of the first electrical steel strip and an end of the second electrical steel strip following the first electrical steel strip,
    the preheating process and the joining process are performed continuously by moving the heating device in the joining direction in conjunction with the rotating tools, and
    in the joining process, joining is performed under conditions that steel microstructures of a joined portion and a thermo-mechanically affected zone formed by joining of the first electrical steel strip and the second electrical steel strip become mainly ferrite phase, respectively, and the relationships of the following Expressions (1) to (4) are satisfied,

$$Dsz \leq 200 \ \mu m \qquad \dots(1)$$

$$Dhaz1 \leq Dbm1 \qquad \dots(2)$$

$$Dhaz2 \leq Dbm2 \qquad \dots(3)$$

$$0.9 \times (Hbm1 + Hbm2)/2 \leq Hsz \leq 1.2 \times (Hbm1 + Hbm2)/2 \qquad \dots(4)$$

    wherein

    Dsz is an average value ($\mu$m) of ferrite grain size of the joined portion,
    Dhaz1 is an average value ($\mu$m) of ferrite grain size of a thermo-mechanically affected zone on a first electrical steel strip side,
    Dhaz2 is an average value ($\mu$m) of ferrite grain size of a thermo-mechanically affected zone on a second electrical steel strip side,

Dbm1 is an average value ($\mu$m) of ferrite grain size of a base metal portion of the first electrical steel strip,

Dbm2 is an average value ($\mu$m) of ferrite grain size of a base metal portion of the second electrical steel strip,

Hsz is an average value of hardness of the joined portion,

Hbm1 is an average value of hardness of the base metal portion of the first electrical steel strip, and

Hbm2 is an average value of hardness of the base metal portion of the second electrical steel strip.

2. The electrical steel strip friction stir welding method according to claim 1, wherein in the joining process, the joining is performed under conditions satisfying the relationships of the following Expressions (5) and (6),

$$0.8 \times TbmL \leq TszL \qquad \dots(5)$$

$$TszH \leq 1.3 \times TbmH \qquad \dots(6)$$

wherein

TszL is the minimum value (mm) of the thickness of the joined portion,

TszH is the maximum value (mm) of the thickness of the joined portion,

TbmL is the thickness (mm) of the thinner of the first electrical steel strip and the second electrical steel strip,

TbmH is the thickness (mm) of the thicker of the first electrical steel strip and the second electrical steel strip, and

when the thicknesses of the first electrical steel strip and the second electrical steel strip are the same, TbmL = TbmH.

3. The electrical steel strip friction stir welding method according to claim 1 or 2, wherein in the preheating process, a preheating temperature of the material to be joined satisfies the relationships of the following Expressions (11) to (13),

$$100 \leq TP_{W=0} \leq 1000 \qquad \dots(11)$$

$$100 \leq TP_{W=0.2D} \leq 1000 \qquad \dots(12)$$

$$50 \leq TP_{W=0.5D} \leq 800 \qquad \dots(13)$$

wherein

W is a distance (mm) separated from a joining center line of the material to be joined in a perpendicular-to-joining direction, $TP_{W=0}$, $TP_{W=0.2D}$, and $TP_{W=0.5D}$ are preheating temperatures (°C) at a surface of the material to be joined at positions where W = 0, 0.2 × D, and 0.5 × D, respectively, and D is the diameter (mm) of a shoulder of the rotating tool.

4. The electrical steel strip friction stir welding method according to claim 3, wherein in the preheating process, the preheating temperature of the material to be joined satisfies the relationships of the following Expressions (14) and (15),

$$0.70 \leq TP_{W=0.2D}/TP_{W=0} \leq 1.00 \quad \dots(14)$$

$$TP_{W=0.5D}/TP_{W=0} \leq 0.45 \qquad \dots(15).$$

5. The electrical steel strip friction stir welding method according to any one of claims 1 to 4, wherein the heating device is a high-frequency induction heating device, a laser irradiation heating device, or a device combining a high-frequency induction heating device and a laser irradiation heating device.

6. A method of producing an electrical steel strip, the method comprising:

joining a first electrical steel strip and a second electrical steel strip by the electrical steel strip friction stir welding method according to any one of claims 1 to 5 to obtain a joined steel strip; and

cold rolling the joined steel strip to obtain a cold-rolled steel strip.

7. A friction stir welding device used in the electrical steel strip friction stir welding method according to any one of claims 1 to 5, the device comprising:

a gripping device that grips a material to be joined,

a pair of rotating tools facing each other,

a driving device for the rotating tools,

a heating device disposed in front of the rotating tools in the joining direction on at least one side of the material to be joined, and

an operation control device for the gripping device, the driving device for the rotating tools, and the heating device.

8. The friction stir welding device according to claim 7, further comprising a temperature measuring device to measure preheating temperatures $TP_{W=0}$, $TP_{W=0.2D}$, and $TP_{W=0.5D}$ of the material to be joined on both sides of the material to be joined, wherein

W is a distance (mm) separated from a joining center line of the material to be joined in a perpendicular-to-joining direction, $TP_{W=0}$, $TP_{W=0.2D}$, and $TP_{W=0.5D}$ are preheating temperatures (°C) at a surface of the material to be joined at positions where $W = 0$, $0.2 \times D$, and $0.5 \times D$, respectively, and D is the diameter (mm) of a shoulder of the rotating tool.

9. The friction stir welding device according to claim 7 or 8, wherein the heating device is a high-frequency induction heating device, a laser irradiation heating device, or a device combining a high-frequency induction heating device and a laser irradiation heating device.

10. An electrical steel strip production device, the device comprising the friction stir welding device according to any one of claims 7 to 9.

11. The electrical steel strip production device according to claim 10, wherein in a continuous cold rolling line, the friction stir welding device according to any one of claims 7 to 9 is disposed upstream of a cold rolling device, or upstream of a pickling device and a cold rolling device.

# FIG. 1A

TOOL ROTATION AXIS

THICKNESS DIRECTION
(DIRECTION PERPENDICULAR TO SURFACE OF MATERIAL TO BE JOINED)

ROTATION DIRECTION OF
FRONT SIDE ROTATING TOOL

JOINING
DIRECTION

JOINING
CENTER LINE

TRAVEL
DIRECTION OF
ELECTRICAL
STEEL STRIP

ROTATION DIRECTION OF
BACK SIDE ROTATING TOOL

TOOL ROTATION AXIS

THICKNESS
DIRECTION

PERPENDICULAR-TO-
JOINING DIRECTION

JOINING DIRECTION

EP 4 400 245 A1

# FIG. 1B

VIEW FROM A-A

TRAVEL DIRECTION OF ELECTRICAL STEEL STRIP

THICKNESS DIRECTION

PERPENDICULAR-TO-JOINING DIRECTION

EP 4 400 245 A1

## FIG. 1C

# FIG. 1D

EP 4 400 245 A1

FIG. 2A

FIG. 2B

# FIG. 3

JOINED PORTION
MEASUREMENT REGION

2          4-2          4                    4-1                1

SECOND ELECTRICAL STEEL STRIP SIDE
THERMO-MECHANICALLY
AFFECTED ZONE MEASUREMENT REGION

FIRST ELECTRICAL STEEL STRIP SIDE
THERMO-MECHANICALLY
AFFECTED ZONE MEASUREMENT REGION

MID-THICKNESS
POSITION

JOINED PORTION
CENTER POSITION

Y (THICKNESS DIRECTION)

X (PERPENDICULAR-TO-
JOINING DIRECTION)

EP 4 400 245 A1

## INTERNATIONAL SEARCH REPORT

| International application No. |
|---|
| **PCT/JP2022/029560** |

**A. CLASSIFICATION OF SUBJECT MATTER**

***B23K 20/12***(2006.01)i
FI: B23K20/12 310; B23K20/12 340; B23K20/12 344; B23K20/12 360

According to International Patent Classification (IPC) or to both national classification and IPC

**B. FIELDS SEARCHED**

Minimum documentation searched (classification system followed by classification symbols)

B23K20/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2018/070317 A1 (JFE STEEL CORP) 19 April 2018 (2018-04-19)<br>paragraphs [0027]-[0115], fig. 1-5 | 1-11 |
| A | JP 2003-170280 A (NIPPON STEEL CORP) 17 June 2003 (2003-06-17)<br>paragraph [0025], fig. 1-3 | 1-11 |
| A | WO 2011/024320 A1 (MITSUBISHI-HITACHI METALS MACHINERY, INC) 03 March 2011 (2011-03-03)<br>claims 1-26, fig. 1-34 | 1-11 |
| A | JP 2018-95956 A (JFE STEEL CORP) 21 June 2018 (2018-06-21)<br>paragraphs [0020]-[0043] | 1-11 |
| A | WO 2021/060176 A1 (JFE STEEL CORP) 01 April 2021 (2021-04-01)<br>paragraphs [0025]-[0077], fig. 1-14 | 1–11 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 September 2022** | **04 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/029560**

| Patent document cited in search report | | | Publication date (day/month/year) | Patent family member(s) | | | Publication date (day/month/year) |
|---|---|---|---|---|---|---|---|
| WO | 2018/070317 | A1 | 19 April 2018 | CN 109803784 A paragraphs [0107]-[0218], fig. 1-5 KR 10-2019-0039985 A | | | |
| JP | 2003-170280 | A | 17 June 2003 | (Family: none) | | | |
| WO | 2011/024320 | A1 | 03 March 2011 | EP 2474382 A1 claims 1-26, fig. 1-34 CN 102481659 A | | | |
| JP | 2018-95956 | A | 21 June 2018 | (Family: none) | | | |
| WO | 2021/060176 | A1 | 01 April 2021 | CN 114423561 A paragraphs [0073]-[0159], fig. 1-14 KR 10-2022-0047652 A | | | |

Form PCT/ISA/210 (patent family annex) (January 2015)

## REFERENCES CITED IN THE DESCRIPTION

**Patent documents cited in the description**

- JP H5305466 A
- JP 2004025284 A
- JP 2011140026 A
- JP H07505090 A
- WO 9310935 A1
- JP 3261433 B
- JP 4838385 B
- JP 4838388 B
- WO 201926864 A1
- WO 201954400 A1
- JP 6332561 B
- JP 6332562 B
- JP 6497451 B
- JP 2020124739 A

**Non-patent literature cited in the description**

- **CUI, L. ; FUJII, H. ; TSUJI, N. ; NOGI, K.** *Scripta Mater.*, 2007, vol. 56, 637-640